# EUROPÄISCHE PATENTANMELDUNG

(11) **EP 2 468 759 A1**
(43) Veröffentlichungstag der Anmeldung: **27.06.2012**
(21) Anmeldenummer: 10195811.4
(22) Anmeldetag: 17.12.2010
(51) Int. Cl.: C07F 7/18, C08L 75/00

(54) **Sekundäre Aminosilane**

(71) Anmelder: Sika Technology AG, 6340 Baar (CH)
(72) Erfinder: Burckhardt, Urs, 8049, Zürich (CH)
(74) Vertreter: Sika Patent Attorneys

(57) **Zusammenfassung**

Die vorliegende Erfindung betrifft neuartige sekundäre Aminosilane, Iminosilane sowie ein Verfahren zu deren Herstellung und Verwendung. Die sekundären Aminosilane lassen sich auf einfache Art und Weise aus leicht zugänglichen Edukten herstellen. Sie zeichnen sich insbesondere durch eine geringe Viskosität aus und sind bestens geeignet für den Aufbau von silanfunktionellen Polymeren, welche eine niedrige Viskosität, eine rasche Aushärtung und eine gute thermische Beständigkeit aufweisen.

## Beschreibung

### Technisches Gebiet

Die Erfindung betrifft sekundäre Aminosilane und ihre Verwendung, insbesondere als Haftvermittler und Vernetzer, sowie als Aufbaukomponente von silanfunktionellen Polymeren; sowie härtbare Massen, insbesondere silanvernetzende härtbare Massen, und ihre Verwendung, insbesondere als Vergussmassen, Dichtstoffe, Klebstoffe, Beläge, Beschichtungen und Anstriche.

### Stand der Technik

Aminogruppen aufweisende Organoalkoxysilane, kurz Aminosilane genannt, werden unter anderem als Haftvermittler, als Vernetzer für härtbare Massen sowie als Aufbaukomponente von silanfunktionellen Polymeren eingesetzt. Aufgrund der einfachen Herstellbarkeit am meisten verbreitet sind Aminosilane mit primären Aminogruppen ("primäre Aminosilane"); diese weisen in der Anwendung aber einige Nachteile auf. Aufgrund der relativ hydrophilen primären Aminogruppe neigen sie zu unerwünschter Feuchtigkeitsaufnahme, was sich negativ auf die Haftung einer unter Feuchtigkeitseinfluss stehenden ausgehärteten Masse zum Untergrund auswirken kann. Beim Einsatz als Aufbaukomponente von silanfunktionellen Polymeren, welche durch Adduktierung von isocyanatfunktionellen Polyurethanpolymeren mit Aminosilanen erhalten werden, führen primäre Aminosilane zu hohen Viskositäten, erschweren die Verarbeitbarkeit der silanfunktionellen Polymere und verschlechtern die Applikationseigenschaften sowie die Dehnbarkeit der damit hergestellten Produkte. Es kann deshalb vorteilhaft sein, anstatt der primären Aminosilane solche mit sekundären Aminogruppen ("sekundäre Aminosilane") einzusetzen; diese sind hydrophober und führen zu niedrigviskoseren silanfunktionellen Polyurethanpolymeren. Die Verfügbarkeit von preisgünstigen und lagerfähigen sekundären Aminosilanen ist aber beschränkt. Mit den aus dem Stand der Technik bekannten sekundären Aminosilanen hergestellte silanvernetzende Polyurethane sind zudem meist langsam in der Aushärtung und oft wenig wärmebeständig.

Sekundäre Aminosilane werden klassischerweise durch Hydrosilylierung von Allylsilanen, beschrieben beispielsweise in US 6,197,912, oder durch nucleophile Substitution von Chlor- oder Bromalkylsilanen mit primären Aminen, bzw. von Alkyl- oder Arylhalogeniden mit primären Aminosilanen, beschrieben beispielsweise in US 3,676,478 bzw. US 6,197,912, hergestellt. Aufgrund der aufwendigen Herstellung und den im Vergleich zu den primären Aminosilanen viel kleineren Mengen sind sie deutlich teurer als die primären Aminosilane. Es ist deshalb für die Hersteller von silanfunktionellen Polymeren vorteilhafter, sekundäre Aminosilane ausgehend von primären Aminosilanen herzustellen. Besonders beliebt ist die Adduktierung mit Michael-Akzeptoren, insbesondere Acrylnitril, Acrylsäureester und Maleinsäureester, beschrieben beispielsweise in US 3,033,815, US 4,067,844 und US 5,364,955. Diese Reagentien sind preisgünstig, und die Umsetzung zum sekundären Aminosilan gelingt schon bei milden Bedingungen. Allerdings verläuft sie meist langsam und nicht vollständig und lässt damit einen Teil der Michael-Akzeptoren in unadduktierter Form zurück, was deren nachträgliche Entfernung notwendig machen kann, will man eine geruchliche Störung der mit den Addukten hergestellten Produkte vermeiden. Die Michael-Addukte primärer Aminosilane weisen zusätzliche funktionelle Gruppen, wie Cyanogruppen und insbesondere Estergruppen, auf. Die Anwesenheit von Estergruppen führt zu silanfunktionellen Polyurethanpolymeren mit relativ niedriger Viskosität. Allerdings ist damit der Nachteil verbunden, dass die Estergruppen mit primären oder sekundären Aminogruppen reaktionsfähig sind und dabei Amide bilden. In silanvernetzenden härtbaren Massen, welche meist mit primären Aminen und Aminosilanen als Katalysatoren und Haftvermittler formuliert werden, ist dies unerwünscht, da es zur Deaktivierung der Amine und zu erhöhter Vernetzungsdichte und damit zu höherer Sprödigkeit des ausgehärteten Polymers führen kann. Unvollständig alkylierte Aminosilane mit Estergruppen sind wegen schleichender Selbstkondensation zu Polyamiden oft auch wenig lagerfähig.

### Darstellung der Erfindung

Aufgabe der Erfindung ist es deshalb, neue sekundäre Aminosilane zur Verfügung zu stellen, die in der Anwendung als Haftvermittler und Vernetzer sowie als Aufbaukomponente von silanfunktionellen Polymeren vorteilhafte Eigenschaften aufweisen. So sollen sie in einem einfachen Verfahren herstellbar sein, bei Raumtemperatur flüssig sein und eine niedrige Viskosität aufweisen. Insbesondere sollen sie silanfunktionelle Polymere ermöglichen, die eine niedrige Viskosität, eine rasche Aushärtung und eine gute thermische Beständigkeit aufweisen.

Überraschenderweise wurde gefunden, dass sekundäre Aminosilane nach Anspruch 1 diese Aufgabe lösen. Sie sind bei Raumtemperatur meist flüssig und relativ niedrigviskos und weisen trotzdem eine geringe Flüchtigkeit und wenig Geruch auf. Sie lassen sich aus kommerziellen primären Aminosilanen und speziellen, eine sekundäre oder tertiäre Aminogruppe aufweisenden Aldehyden in einem einfachen Prozess herstellen, der keine aufwendigen Aufarbeitungsschritte erfordert. Vorteilhafte Eigenschaften wie die schnelle Hydrolysegeschwindigkeit der Silangruppen, die gute Verträglichkeit in vielen härtbaren Massen und die besonders guten haftvermittelnden Eigenschaften können vermutlich auf die Anwesenheit der zusätzlichen, aus dem Aldehyd stammenden Aminogruppe zurückgeführt werden. Besonders vorteilhafte Eigenschaften weisen die sekundären Aminosilane nach Anspruch 1 in der Anwendung zur Herstellung silanfunktioneller Polymere durch Adduktierung von isocyanatfunktionellen Polyurethanpolymeren auf. Silanvernetzende härtbare Massen enthaltend solche silanfunktionellen Polymere sind von vergleichsweise niedriger Viskosität, härten bei Kontakt mit Feuchtigkeit rasch und vollständig aus und verfügen überraschenderweise über eine ausgezeichnete thermische Beständigkeit, welche wesentlich besser ist als diejenige von vergleichbaren, mit sekundären Aminosilanen nach dem Stand der Technik hergestellten Systemen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Aminosilan der Formel (I) 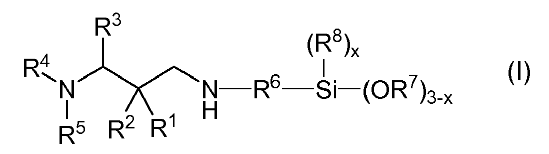 wobei
R¹ und R² entweder
   unabhängig voneinander jeweils für einen einwertigen Kohlenwasserstoffrest mit 1 bis 12 C-Atomen stehen,
   oder zusammen für einen zweiwertigen Kohlenwasserstoffrest mit 4 bis 12 C-Atomen, der Teil eines, gegebenenfalls substituierten, carbocyclischen
   Rings mit 5 bis 8, bevorzugt 6, C-Atomen ist, stehen;
R³ für ein Wasserstoffatom oder eine Alkylgruppe oder eine Arylalkylgruppe oder eine Alkoxycarbonylgruppe steht;
   und entweder
R⁴ für einen einwertigen aliphatischen, cycloaliphatischen oder arylaliphatischen Rest mit 1 bis 20 C-Atomen, welcher gegebenenfalls Heteroatome enthält, steht, und
R⁵ für ein Wasserstoffatom oder für einen einwertigen aliphatischen, cycloaliphatischen oder arylaliphatischen Rest mit 1 bis 20 C-Atomen, welcher gegebenenfalls Heteroatome enthält, steht,
   oder
R⁴ und R⁵ zusammen für einen zweiwertigen aliphatischen Rest mit 3 bis 30 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome enthält, stehen;
R⁶ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht; R⁷ für eine Alkylgruppe mit 1 bis 10 C-Atomen steht, welche gegebenenfalls Ether-Sauerstoff aufweist;
R⁸ für eine Alkylgruppe mit 1 bis 8 C-Atomen steht; und x für 0, 1 oder 2 steht.
Zwei OR⁷-Gruppen können zusammen für eine zweiwertige Glykolatgruppe, welche mit dem Silicium-Atom einen Ring bildet, stehen.

Als "sekundäres Aminosilan" wird ein Organoalkoxysilan bezeichnet, dessen direkt an das Silicium-Atom gebundener Rest mindestens eine sekundäre Aminogruppe aufweist. Als "primäres Aminosilan" wird ein Organoalkoxysilan bezeichnet, dessen direkt an das Silicium-Atom gebundener Rest mindestens eine primäre Aminogruppe aufweist. Als "Iminosilan" wird ein Organoalkoxysilan bezeichnet, dessen direkt an das Silicium-Atom gebundener Rest mindestens eine Iminogruppe aufweist.

Als "Organoalkoxysilan" oder kurz "Silan" wird eine Silicium-haltige Verbindung bezeichnet, in der das Silicium-Atom sowohl mindestens einen, insbesondere zwei oder drei, Alkoxygruppen, als auch einen direkt gebundenen organischen Rest trägt und somit mindestens eine Si-C-Bindung aufweist. Als "Silangruppe" wird die an den organischen Rest eines Organoalkoxysilans gebundene Silicium-haltige Gruppe bezeichnet.

Als "primäre Aminogruppe" wird eine NH₂-Gruppe bezeichnet, die an einen organischen Rest gebunden ist, als "sekundäre Aminogruppe" wird eine NH-Gruppe bezeichnet, die an zwei organische Reste, welche auch gemeinsam Teil eines Rings sein können, gebunden ist, und als "tertiäre Aminogruppe" wird eine Aminogruppe bezeichnet, deren Stickstoffatom ("tertiärer Amin-Stickstoff") an drei organische Reste gebunden ist, wobei zwei dieser Reste auch gemeinsam Teil eines Rings sein können.

Als "silanvernetzend" wird eine härtbare Masse bezeichnet, bei welcher ein Silangruppen aufweisendes ("silanfunktionelles") Polymer vorwiegend über die Reaktion der Silangruppen mit Feuchtigkeit ausgehärtet werden kann.

Als "aliphatisch" wird ein Amin bzw. ein Isocyanat bezeichnet, wenn deren Amino- bzw. Isocyanatgruppen jeweils an aliphatische, cycloaliphatische oder arylaliphatische Reste gebunden sind; entsprechend werden deren funktionelle Gruppen als aliphatische Amino- bzw. aliphatische Isocyanatgruppen bezeichnet.

Als "aromatisch" wird ein Amin bzw. ein Isocyanat bezeichnet, wenn deren Amino- bzw. Isocyanatgruppen jeweils an einen aromatischen Rest gebunden sind; entsprechend werden deren funktionelle Gruppen als aromatische Amino- bzw. aromatische Isocyanatgruppen bezeichnet.

Der Begriff "härtbare Masse" umfasst flüssige oder schmelzbare reaktionsfähige organische Massen und Zusammensetzungen davon, welche zumindest teilweise synthetisch hergestellt sind und für sich allein und/oder durch Luftkontakt zu Kunststoffen und Kunststoff-Zusammensetzungen aushärten können.

Der Begriff "Polymer" umfasst einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethan" umfasst sämtliche Polymere, welche nach dem sogenannten Diisocyanat-Polyadditions-Verfahren hergestellt werden. Somit weisen Polyurethane üblicherweise Urethan- oder Thiourethangruppen und insbesondere auch Harnstoffgruppen auf. Der Begriff Polyurethan schliesst aber auch solche Polymere ein, die nahezu oder gänzlich frei sind von Urethangruppen. Insbesondere sind dies sogenannte Polyharnstoffe, Polyether-Polyharnstoffe und Polyester-Polyharnstoffe, sowie weiterhin Polyether-Polyurethane, Polyester-Polyurethane, Polyisocyanurate und Polycarbodiimide.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Der Begriff "Polyisocyanat" umfasst Verbindungen mit zwei oder mehr Isocyanatgruppen, unabhängig davon, ob es sich dabei um monomere Di- oder Triisocyanate, oligomere Diisocyanate oder Isocyanatgruppen aufweisende Addukte und Polymere handelt.

Die fett markierten Bezeichnungen wie **AS, ALD, Y1, Y2, C, AD, VB, RG, SP, PUP, S1, S2** oder dergleichen dienen lediglich für das bessere Leseverständnis und Identifizierung.

Als "Raumtemperatur" wird eine Temperatur von 23 °C bezeichnet.

Bevorzugt stehen R¹ und R² jeweils für einen Methylrest.

Bevorzugt steht R³ für ein Wasserstoffatom.

Insbesondere stehen somit R¹ und R² jeweils für einen Methylrest und/oder R³ für ein Wasserstoffatom.

Bevorzugt stehen R⁴ für Methyl, Ethyl, Propyl, Isopropyl, Butyl, 2-Ethylhexyl, Cyclohexyl, 2-Hydroxyethyl, 2-Hydroxypropyl oder Benzyl, und R⁵ für Wasserstoff oder Methyl, Ethyl, Propyl, Isopropyl, Butyl, 2-Ethylhexyl, Cyclohexyl, 2-Hydroxyethyl, 2-Hydroxypropyl oder Benzyl.

Weiterhin bevorzugt bilden R⁴ und R⁵ zusammen - unter Einbezug des Stickstoffatoms - einen Ring, insbesondere einen Pyrrolidin-, Piperidin,- Morpholin- oder N-Alkylpiperazin-Ring, wobei dieser Ring oder die Alkylgruppe gegebenenfalls substituiert sind.

Bevorzugt steht R⁶ für einen linearen oder verzweigten Alkylenrest mit 1 bis 6 C-Atomen, insbesondere für eine Propylengruppe.

Weiterhin bevorzugt steht R⁶ für einen linearen Alkylenrest mit 5 bis 7 C-Atomen, welcher eine oder 2 sekundäre Aminogruppen in der Kette aufweist, insbesondere für einen -(CH₂)₂-NH-(CH₂)₃- oder für einen -(CH₂)₂-NH-(CH₂)₂-NH-(CH₂)₃- Rest.

Bevorzugt steht R⁷ für eine Methyl- oder für eine Ethyl- oder für eine Isopropylgruppe, insbesondere für eine Methyl- oder für eine Ethylgruppe.

Bevorzugt steht R⁸ für eine Methyl- oder für eine Ethylgruppe, insbesondere für eine Methylgruppe.

Bevorzugt steht x für 0 oder für 1, insbesondere für 0.

Ein weiterer Gegenstand der vorliegenden Erfindung ist ein Iminosilan der Formel (II).

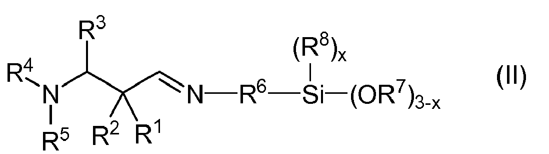

In der Formel (II) weisen R¹, R², R³, R⁴, R⁵, R⁶, R⁷, R⁸ und x die bereits genannten Bedeutungen auf.

Zur Herstellung eines Aminosilans der Formel (I) kann ein Iminosilan der Formel (II) hydriert werden. Diese Hydrierung kann direkt mit molekularem Wasserstoff oder indirekt durch Wasserstoff-Transfer von anderen Reagentien erfolgen. Beispiele für solche Reagentien sind Ameisensäure, wobei CO₂ freigesetzt wird (in Anlehnung an eine Leuckart-Wallach-Reaktion); Cyclohexen, welches dabei zu Benzol dehydriert wird, sowie andere Alkene wie Limonen; Organosilane; Alkalimetalle in protischen Lösemitteln; oder Hydrazin in Gegenwart eines Oxidationsmittels. Unter dem Begriff "Hydrierung" soll hier auch die Reduktion mittels Hydriden, wie beispielsweise Lithiumaluminiumhydrid, Natriumborhydrid und Natriumbis(2-methoxyethoxy)aluminiumhydrid (Vitride^{®}, Red-Al^{®}), eingeschlossen sein. Bevorzugt ist die Hydrierung mit molekularem Wasserstoff.

Der für die Hydrierung benötigte Wasserstoff wird bevorzugt bei erhöhtem Druck, insbesondere 5 bis 250 bar, und erhöhter Temperatur, insbesondere 20 bis 160 °C, in Anwesenheit eines geeigneten Katalysators verwendet. Dabei werden die Bedingungen vorteilhaft so gewählt, dass einerseits die Iminogruppen möglichst vollständig hydriert werden und andererseits möglichst keine anderen Bestandteile des Imins der Formel (IV) hydriert oder zersetzt werden.

Als Katalysatoren für die Hydrierung geeignet sind homogene Katalysatoren, wie beispielsweise Rhodium-, Ruthenium- oder Iridiumkomplexe, und insbesondere heterogene Katalysatoren, wie beispielsweise Platin, Palladium, Rhodium, Ruthenium, Osmium, Rhenium, Nickel, Kobalt oder Eisen, sowie deren Verbindungen oder Zubereitungen auf Trägermaterialien, wobei als Trägermaterialien insbesondere Bims, Kieselgur, Aluminium, Silicagel oder Aktivkohle geeignet sind. Insbesondere geeignet sind Palladium auf Kohle (Pd/C), Platin auf Kohle (Pt/C), Adams-Katalysator und Raney-Nickel. Bevorzugt sind Palladium auf Kohle und Platin auf Kohle.

Die reduktive Alkylierung wird bevorzugt in flüssiger Phase durchgeführt. Sie kann wahlweise ohne Lösemittel oder in Anwesenheit eines Lösemittels erfolgen, wobei geeignete Lösemittel unter den Reaktionsbedingungen inert sind. Insbesondere geeignet als Lösemittel sind C₁ bis C₁₀-Alkane, wie beispielsweise Hexan, Heptan oder Cyclohexan, und Alkohole, insbesondere primäre C₁ bis C₆-Alkohole wie Methanol oder Ethanol, aber auch sekundäre Alkohole wie Isopropanol und tertiäre Alkohole wie tert.-Butanol. Bei der Verwendung eines Alkohols als Lösemittel wird bevorzugt derjenige Alkohol eingesetzt, welcher bei der Hydrolyse der Silangruppen freigesetzt wird, also beispielsweise Methanol bei der Verwendung eines Methoxysilans, beziehungsweise Ethanol bei Verwendung eines Ethoxysilans.

Die Hydrierung kann batchweise oder in einem kontinuierlichen Prozess durchgeführt werden, beispielsweise in einer kontinuierlich arbeitenden Hydrier-Apparatur. Dabei wird mindestens ein Iminosilan der Formel (II), gegebenenfalls in Lösung, unter Druck kontinuierlich mit Wasserstoff vermischt und durch einen geeigneten Katalysator geführt. Der Wasserstoff kann dabei mittels Wasser-Elektrolyse kontinuierlich erzeugt werden.

Falls gewünscht, kann das Aminosilan der Formel (I) anschliessend an die Herstellung gereinigt werden, beispielsweise mittels Destillation.

Ein Iminosilan der Formel (II) wird insbesondere durch ein Verfahren zur Herstellung erhalten, bei dem mindestens ein Aminosilan **AS** der Formel (III) mit mindestens einem Aldehyd **ALD** der Formel (IV) kondensiert wird. Die Reaktanden können dabei in freier oder in derivatisierter Form vorliegen.

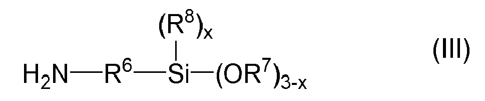

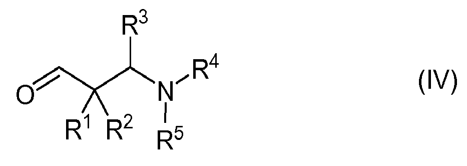

In den Formeln (III) und (IV) weisen R¹, R², R³, R⁴, R⁵, R⁶, R⁷, R⁸ und x die bereits genannten Bedeutungen auf.

Der Aldehyd **ALD** kann in Bezug auf das Aminosilan **AS** stöchiometrisch oder in stöchiometrischem Überschuss eingesetzt werden.

Solche Kondensationsreaktionen zwischen primären Aminen und Aldehyden sind bestens bekannt. Zur Herstellung eines Iminosilans der Formel (II) wird im vorliegenden Fall als primäres Amin ein Aminosilan verwendet. Dies beinhaltet die zusätzliche Schwierigkeit, dass das bei der Kondensation freigesetzte Wasser zu einer Hydrolyse von Silangruppen führen kann. Dies ist jedoch unerwünscht und sollte zur Erhaltung eines qualitativ guten Produktes weitgehend unterdrückt werden. Andernfalls bilden sich unter erneuter Freisetzung von Wasser Kondensationsprodukte in Form von Organosiloxanen, im vorliegenden Fall also Moleküle, welche aus zwei oder mehr über Siloxangruppen verbundenen Iminosilanen bestehen. Es ist für die Herstellung eines Iminosilans der Formel (II) von guter Qualität vorteilhaft, eine Herstellmethode zu wählen, bei welcher die Hydrolyse der Silangruppen weitgehend unterdrückt wird, um nach dessen Hydrierung Aminosilane der Formel (I) von guter Qualität zu erhalten.

Zur Herstellung eines Iminosilans der Formel (II) durch Kondensation eines Aminosilans **AS** der Formel (III) mit einem Aldehyd **ALD** der Formel (IV) wird eine Methode bevorzugt, bei der das Aminosilan **AS** vorgelegt und der Aldehyd **ALD** zugetropft wird. Dabei wird vorteilhaft darauf geachtet, dass bereits während der Umsetzung das gebildete Wasser aus der Reaktionsmischung entfernt wird, beispielsweise indem durch dauerndes Anlegen von Vakuum das bei der Kondensation freiwerdende Wasser sofort abgezogen wird, oder indem dieses durch eine Wasser absorbierende Substanz, wie beispielsweise ein geeignetes Molekularsieb, entfernt wird. Die Reaktion kann bei Temperaturen von 5 bis 250 °C durchgeführt werden. Bevorzugt ist eine Reaktionstemperatur im Bereich von 20 bis 100 °C.

Üblicherweise werden solche Reaktionen in Anwesenheit eines Lösemittels durchgeführt, welches mit Wasser ein Azeotrop bildet, wobei das Wasser zusammen mit dem Lösemittel aus der Reaktionsmischung entfernt wird. Bevorzugt ist jedoch eine Herstellung des Iminosilans der Formel (II) unter Verwendung desjenigen Alkohols, welcher bei der Hydrolyse der Silangruppen freigesetzt wird, also beispielsweise Methanol bei der Verwendung eines Methoxysilans, beziehungsweise Ethanol bei Verwendung eines Ethoxysilans. Es wurde beobachtet, dass beim Vorlegen des Aminosilans **AS** im entsprechenden Alkohol und Zutropfen des Aldehyds **ALD** unter sofortiger Entfernung des Wassers Iminosilane der Formel (II) von hervorragender Qualität erhalten werden. Es ist aber auch möglich, Iminosilane der Formel (II) von guter Qualität zu erhalten, indem bei ihrer Herstellung ganz auf den Einsatz von Lösemitteln verzichtet wird. Dabei wird das Aminosilan **AS** vorgelegt und der Aldehyd **ALD** im Vakuum zugetropft.

Weiterhin kann ein Iminosilan der Formel (II) insbesondere auch auf indirektem Weg als Produkt einer Umiminierungsreaktion erhalten werden. Dazu wird zuerst ein Zwischenprodukt in Form eines Imins der Formel (V a) hergestellt, indem mindestens ein Aldehyd **ALD** der Formel (IV) mit einem kleinen, relativ flüchtigen primären Monoamin umgesetzt wird, wobei das bei der Kondensation entstandene Wasser auf geeignete Weise möglichst vollständig entfernt wird. Anschliessend wird das weitgehend wasserfreie Zwischenprodukt mit mindestens einem Aminosilan **AS** der Formel (III) bei erhöhter Temperatur und reduziertem Druck unter Umiminierung zum Aminosilan der Formel (I) umgesetzt, wobei das kleine, relativ flüchtige primäre Monoamin mittels Vakuum laufend aus der Reaktionsmischung entfernt wird. 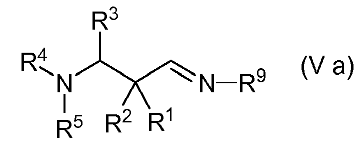 In der Formel (V a) steht
R⁹ für den Alkylrest des kleinen, relativ flüchtigen primären Monoamins, bevorzugt für eine Alkylgruppe mit 1 bis 6 C-Atomen, insbesondere für eine Propyl-, Isopropyl- oder Butylgruppe,
und R¹, R², R³, R⁴ und R⁵ weisen die bereits genannten Bedeutungen auf.

Weiterhin kann ein Iminosilan der Formel (II) insbesondere auch auf indirektem Weg über ein Zwischenprodukt in Form eines Acetals der Formel (V b) erhalten werden. 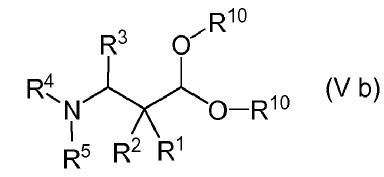 In der Formel (V b) steht
R¹⁰ für den Alkylrest des kleinen, relativ flüchtigen Alkohols, bevorzugt für eine Alkylgruppe mit 1 bis 6 C-Atomen, insbesondere für eine Methyl-, Ethyl- oder Isopropylgruppe,
und R¹, R², R³, R⁴ und R⁵ weisen die bereits genannten Bedeutungen auf.

Zur Herstellung eins Acetals der Formel (V b) wird der Aldehyd **ALD** der Formel (IV) mit einem kleinen, relativ flüchtigen Alkohol kondensiert, wobei das dabei freigesetzte Wasser auf geeignete Weise möglichst vollständig entfernt wird. Anschliessend wird das weitgehend wasserfreie Zwischenprodukt mit mindestens einem Aminosilan **AS** der Formel (III) bei erhöhter Temperatur und reduziertem Druck zum Aminosilan der Formel (I), gegebenenfalls in Anwesenheit eines Katalysators, umgesetzt, wobei der kleine, relativ flüchtige Alkohol mittels Vakuum laufend aus der Reaktionsmischung entfernt wird.

Für den Fall, dass zur Umsetzung mit dem Acetal der Formel (V b) ein Aminosilan **AS** mit Methoxysilangruppen eingesetzt wird, also R⁷ in Formel (III) für Methyl steht, wird als relativ flüchtiger Alkohol zur Acetalbildung bevorzugt Methanol eingesetzt, und im entsprechenden Fall mit Ethoxysilangruppen wird bevorzugt Ethanol zur Herstellung des Acetals verwendet.

Sowohl die Herstellung über ein Acetal als auch die Herstellung über eine Umiminierung sind zwar etwas aufwendiger als die direkte Kondensation, sie haben aber beide den Vorteil, dass das entstehende Wasser jeweils entfernt werden kann, bevor es mit Silangruppen in Kontakt kommt und eine ungewollte Hydrolyse der Silangruppen hervorrufen kann.

Die Herstellung eines Aminosilans der Formel (I) ist aber auch möglich, indem mindestens ein Aminosilan **AS** der Formel (III) mit mindestens einem Aldehyd **ALD** der Formel (IV) in einer Eintopfreaktion unter Hydrierung umgesetzt wird, ohne das entsprechende Iminosilan der Formel (II) zu isolieren. Beispielsweise kann das Aminosilan **AS** in einem geeigneten Lösemittel in Anwesenheit eines Molekularsiebs vorgelegt werden, dann der Aldehyd **ALD** zugetropft und die Reaktionslösung schliesslich - optional nach Entfernung des Molekularsiebs - mit einer geeigneten Methode hydriert werden.

Als Aminosilan **AS** der Formel (III) geeignet sind insbesondere die folgenden primären Aminosilane:
- 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan sowie deren Analoga mit Ethoxy- oder Isopropoxygruppen anstelle der Methoxygruppen am Silicium;
- sogenannte Diaminosilane, welche neben einer primären Aminogruppe eine sekundäre Aminogruppe (NH-Gruppe) tragen, die insbesondere in γ-Stellung zum Siliciumatom steht, wie insbesondere N-(2-Aminoethyl)-3-aminopropyl-trimethoxysilan, N-(2-Aminoethyl)-3-aminopropyl-methyldimethoxysilan, N-(2-Aminoethyl)-3-aminopropyl-triethoxysilan und N-(2-Aminoethyl)-3-aminopropyl-triisopropoxysilan;
- sogenannte Triaminosilane, welche neben einer primären Aminogruppe zwei sekundäre Aminogruppen (NH-Gruppen) tragen, wie insbesondere N-(2-Aminoethyl)-N'-[3-(trimethoxysilyl)propyl]ethylendiamin.

Bevorzugt ist das Aminosilan **AS** der Formel (III) ausgewählt aus der Gruppe bestehend aus 3-Aminopropyl-trimethoxysilan, 3-Aminopropyl-triethoxysilan, 4-Amino-3,3-dimethylbutyl-trimethoxysilan, N-(2-Aminoethyl)-3-aminopropyl-trimethoxysilan und N-(2-Aminoethyl)-3-aminopropyl-triethoxysilan.

Als Aldehyd **ALD** der Formel (IV) geeignet sind insbesondere die Produkte aus einer der Mannich-Reaktion analogen α-Aminoalkylierung, wie sie aus der Fachliteratur bekannt ist. Ein Aldehyd **Y1** der Formel (VI), ein Aldehyd **Y2** der Formel (VII) und ein primäres oder sekundäres aliphatisches Amin **C** der Formel (VIII) werden dabei unter Wasserabspaltung zu einem Aldehyd **ALD** der Formel (IV) umgesetzt.

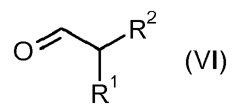

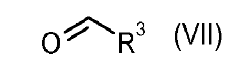

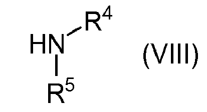

In den Formeln (VI), (VII) und (VIII) weisen R¹, R², R³, R⁴ und R⁵ die bereits genannten Bedeutungen auf.

Diese Umsetzung kann entweder mit den freien Reagentien **Y1, Y2** und **C** gemäss den Formeln (VI), (VII) und (VIII) geführt werden, oder die Reagentien können teilweise oder vollständig in derivatisierter Form eingesetzt werden. In einer bevorzugten Ausführungsform wird die Umsetzung mit allen Reagentien in freier Form als Eintopfreaktion geführt und der Aldehyd **ALD** nach erfolgter Umsetzung durch Destillation gereinigt. Bevorzugt werden dabei keine organischen Lösemittel eingesetzt.

Als Aldehyd **Y1** der Formel (VI) geeignet sind insbesondere Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd und Diphenylacetaldehyd. Bevorzugt ist Isobutyraldehyd.

Als Aldehyd **Y2** der Formel (VII) geeignet sind insbesondere Formaldehyd, Acetaldehyd, Propionaldehyd, Butyraldehyd, Isobutyraldehyd, Phenylacetaldehyd und Glyoxylsäureester, insbesondere Glyoxylsäureethylester. Bevorzugt ist Formaldehyd.

Als Amin C der Formel (VIII) geeignet sind insbesondere Methylamin, Dimethylamin, Ethylamin, Diethylamin, Propylamin, Dipropylamin, Isopropylamin, Diisopropylamin, Butylamin, Dibutylamin, Isobutylamin, Diisobutylamin, sek.-Butylamin, Di-sek.-Butylamin, Hexylamin, Dihexylamin, 2-Ethylhexylamin, Di-(2-ethylhexyl)amin, Octylamin, Decylamin, Dodecylamin, Ethanolamin, Diethanolamin, Isopropanolamin, Diisopropanolamin, Cyclohexylamin, Dicyclohexylamin, N-Methylbutylamin, N-Ethylbutylamin, N-Methylcyclohexylamin, N-Ethylcyclohexylamin, Bis-(2-methoxyethyl)amin, Pyrrolidin, Piperidin, Benzylamin, N-Methyl-benzylamin, N-Isopropyl-benzylamin, N-tert.Butyl-benzylamin, Dibenzylamin, Morpholin, 2,6-Dimethylmorpholin, Bis-(3-Dimethylaminopropyl)amin, N-Methyl- oder N-Ethylpiperazin, sowie weiterhin Alkoxylate von primären Aminen wie 2-(N-Ethylamino)ethanol und 2-(N-Propylamino)ethanol. Bevorzugt sind Methylamin, Dimethylamin, Ethylamin, Diethylamin, Isopropylamin, Diisopropylamin, Butylamin, Dibutylamin, Isobutylamin, Diisobutylamin, Hexylamin, 2-Ethylhexylamin, Cyclohexylamin, N-Methylcyclohexylamin, N-Methyl-benzylamin, N-Isopropyl-benzylamin, N-tert.Butyl-benzylamin, Benzylamin, Dibenzylamin, Pyrrolidin, Piperidin, Morpholin und 2,6-Dimethylmorpholin. Besonders bevorzugt sind Methylamin, Dimethylamin und insbesondere Morpholin.

Weiterhin geeignet als Amin **C** ist Piperazin. Im Fall von Piperazin entstehen insbesondere Aldehyde **ALD** in Form von Dialdehyden, welche bei der Umsetzung mit Aminosilanen **AS** im Molverhältnis 1:2 zur Herstellung von Aminosilanen der Formel (I) mit zwei Silangruppen und mindestens zwei sekundären Aminogruppen verwendet werden können.

Bevorzugt ist der Aldehyd **ALD** der Formel (IV) ausgewählt aus der Gruppe bestehend aus 2,2-Dimethyl-3-methylamino-propanal, 2,2-Dimethyl-3-dimethylamino-propanal, 2,2-Dimethyl-3-ethylamino-propanal, 2,2-Dimethyl-3-diethylamino-propanal, 2,2-Dimethyl-3-butylamino-propanal, 2,2-Dimethyl-3-dibutylamino-propanal, 2,2-Dimethyl-3-hexylamino-propanal, 2,2-Dimethyl-3-(2-ethylhexyl)amino-propanal, 2,2-Dimethyl-3-dodecylamino-propanal, 2,2-Dimethyl-3-(N-pyrrolidino)-propanal, 2,2-Dimethyl-3-(N-piperidino)-propanal, 2,2-Dimethyl-3-(N-morpholino)-propanal, 2,2-Dimethyl-3-(N-(2,6-dimethyl)morpholino)-propanal, 2,2-Dimethyl-3-benzylamino-propanal, 2,2-Dimethyl-3-(N-benzylmethylamino)-propanal, 2,2-Dimethyl-3-(N-benzylisopropylamino)-propanal, 2,2-Dimethyl-3-cyclohexylamino-propanal, 2,2-Dimethyl-3-(N-cyclohexylmethyl-amino)-propanal und N,N'-Bis(2,2-dimethyl-3-oxopropyl)-piperazin.

Die Aminosilane der Formel (I) sind unter Ausschluss von Feuchtigkeit lagerfähig. Ebenso sind auch die Iminosilane der Formel (II) unter Ausschluss von Feuchtigkeit lagerfähig.

Die Silangruppen der Aminosilane der Formel (I) und die Silangruppen der Iminosilane der Formel (II) haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen), wobei der entsprechende Alkohol, beispielsweise Methanol im Fall von Methoxysilangruppen oder Ethanol im Fall von Ethoxysilangruppen, freigesetzt wird.

Bei der - zumindest partiellen - Hydrolyse von mindestens einem Aminosilan der Formel (I) oder mindestens einem Iminosilan der Formel (II) werden Verbindungen mit mindestens einer Silanolgruppe der Formel (IX) erhalten.

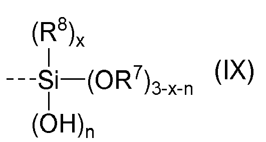

In der Formel (IX) steht n für 1 oder 2 oder 3, mit der Massgabe, dass n höchstens den Wert (3-x) aufweist. R⁷ und R⁸ und x weisen die bereits genannten Bedeutungen auf.

Die gestrichelten Linien in den Formeln in diesem Dokument stellen jeweils die Bindung zwischen einem Substituenten und dem zugehörigen Molekülrest dar.

Derartige hydrolysierte oder partiell hydrolysierte Verbindungen mit Silanolgruppen der Formel (IX) sind sehr reaktiv und können sehr schnell weiterreagieren, entweder durch Kondensation mit weiteren Silanolgruppen unter Bildung von Siloxangruppen (Si-O-Si-Gruppen) oder beispielsweise durch Kondensation mit Hydroxylgruppen eines Substrates.

Sowohl die Aminosilane der Formel (I) als auch die Iminosilane der Formel (II) besitzen die Fähigkeit, eine starke Haftung zu diversen Substraten aufzubauen, beziehungsweise den Haftungsaufbau von Zusammensetzungen enthaltend diese Silane zu einem Substrat zu verbessern. Beim Aufbau einer Haftung sind möglicherweise hauptsächlich die Silanolgruppen beteiligt, welche, anstatt ausschliesslich untereinander zu Organosiloxanen zu kondensieren, zum Teil eine Verbindung mit dem jeweiligen Substrat eingehen.

Die Aminosilane der Formel (I) weisen neben der sekundären Aminogruppe noch mindestens eine weitere, entweder sekundäre oder tertiäre Aminogruppe auf. Diese kann eine katalytische Wirkung auf die Hydrolyse der Silangruppen ausüben. Ebenso weisen die Iminosilane der Formel (II) neben der Iminogruppe eine sekundäre oder tertiäre Aminogruppe auf, die eine katalytische Wirkung auf die Hydrolyse der Silangruppen ausüben kann. Um die Hydrolyse der Silangruppen noch weiter zu beschleunigen, kann es vorteilhaft sein, ein Aminosilan der Formel (I) oder ein Iminosilan der Formel (II) mit geeigneten Katalysatoren zu kombinieren. Als Katalysatoren eignen sich insbesondere Organozinnverbindungen, wie Dibutylzinndilaurat oder Dibutylzinndiacetylacetonat, Titanate und Zirkonate sowie Amine, Amidine und Guanidine wie beispielsweise 1,4-Diazabicyclo[2.2.2]octan (DABCO), Diaza-bicyclo[5.4.0]undec-7-en (DBU) oder 1,1,3,3-Tetramethylguanidin.

Die Aminosilane der Formel (I) und/oder die Iminosilane der Formel (II) sind vorteilhaft verwendbar als Haftvermittler zwischen Kunststoffen und verschiedenen Substraten, zum Beschichten von Oberflächen, beispielsweise um deren Eigenschaften bezüglich Verschmutzungsneigung, Reinigungsfreundlichkeit usw. zu verbessern, als Beschleuniger und/oder als Trocknungsmittel. Sie können dazu als solche oder als Bestandteil von Lösungen und Zusammensetzungen eingesetzt werden, beispielsweise als Vorbehandlungsmittel oder Aktivator, Grundierung oder Primer.

Geeignete Substrate für die Anwendung der Aminosilane der Formel (I) oder der Iminosilane der Formel (II) als Haftvermittler oder zum Beschichten ihrer Oberflächen sind insbesondere die im folgenden erwähnten Substrate **S1** und **S2.**

Weiterhin verwendbar sind die Aminosilane der Formel (I) und die Iminosilane der Formel (II) als Bestandteil von härtbaren Massen, wobei sie in den härtbaren Massen als Vernetzer und/oder als Haftvermittler und/oder als Beschleuniger und/oder als Trocknungsmittel wirken können, sowie als Bestandteil von Aktivatoren oder Primern.

Bei den Aminosilanen der Formel (I) handelt es sich um neue Verbindungen mit überraschenden Eigenschaften. Sie sind bei Raumtemperatur meist flüssig und relativ niedrigviskos, was für viele Anwendungen ein grosser Vorteil ist. Trotzdem weisen sie eine geringe Flüchtigkeit und wenig Geruch auf, was für niedrigviskose Aminoverbindungen sonst oft nicht der Fall ist. Weiterhin lassen sie sich aus kommerziellen primären Aminosilanen und den beschriebenen Aldehyden **ALD** der Formel (IV) in einem einfachen Prozess herstellen, der keine aufwendigen Aufarbeitungsschritte erfordert. Dies ist möglich, da die Iminbildung zwischen dem tertiären Aldehyd **ALD** und primären Aminogruppen ohne aktive Wasserentfernung spontan und ohne Aminalbildung verläuft, die Hydrierung trotz sterischer Hinderung durch die tertiär substituierte Iminogruppe überraschend einfach - schon bei relativ tiefem Wasserstoffdruck und relativ niedriger Temperatur - gelingt und die entstandenen sekundären Aminogruppen der Aminosilane der Formel (I) nicht an der Alkylierungsreaktion teilnehmen, es also nicht zur Überalkylierung unter Verlust an NH-Funktionalität kommen kann.

Die Aminosilane der Formel (I) weisen neben der durch Hydrierung aus der Iminogruppe gebildeten sekundären Aminogruppe noch mindestens eine weitere Aminogruppe in Form einer tertiären oder sekundären Aminogruppe auf, welche aus dem Aldehyd **ALD** stammt. Auf diese zusätzliche Aminogruppe können vermutlich einige besonders vorteilhafte Eigenschaften der Aminosilane der Formel (I) zurückgeführt werden, insbesondere die schnelle Hydrolysegeschwindigkeit der Silangruppen, die gute Verträglichkeit in vielen härtbaren Massen und die besonders guten haftvermittelnden Eigenschaften. Insbesondere das Vorhandensein einer Morpholinogruppe scheint eine beschleunigende Wirkung auf die Hydroysegeschwindigkeit zu haben.

Besonders vorteilhafte Eigenschaften weisen die Aminosilane der Formel (I) in adduktierter Form als härtbares, silanvernetzendes Polymer auf. Solche Polymere sind erhältlich durch die Umsetzung von isocyanatfunktionellen Polyurethanpolymeren mit Aminosilanen. Werden dazu Aminosilane der Formel (I) verwendet, so entstehen silanfunktionelle Polymere mit einer relativ niedrigen Viskosität, welche bei Kontakt mit Feuchtigkeit rasch und vollständig aushärten. Besonders überraschend ist aber der Umstand, dass härtbare Massen enthaltend silanfunktionelle Polymere, welche abgeleitet sind von Aminosilanen der Formel (I), im ausgehärteten Zustand eine ausgezeichnete thermische Beständigkeit aufweisen. Die thermische Beständigkeit dieser Systeme ist dabei wesentlich besser als die thermische Beständigkeit von vergleichbaren Systemen, welche abgeleitet sind von sekundäre Aminogruppen aufweisenden Aminosilanen nach dem Stand der Technik.

Bei den Iminosilanen der Formel (II) handelt es sich ebenfalls um neue Verbindungen mit überraschenden Eigenschaften. Sie sind bei Raumtemperatur meist flüssig und relativ niedrigviskos und weisen eine geringe Flüchtigkeit und wenig Geruch auf. Unter Ausschluss von Feuchtigkeit sind sie lagerstabil. Bei Kontakt mit Wasser findet eine Hydrolyse sowohl der Iminogruppen also auch der Silangruppen statt. Die Iminogruppen reagieren bei der Hydrolyse formal zu primären Aminogruppen, wobei der entsprechende Aldehyd **ALD** freigesetzt wird. In Anwesenheit von gegenüber Aminen reaktiven Gruppen wie beispielsweise Isocyanatgruppen reagieren die primären Aminogruppen weiter, beispielsweise unter Bildung von Harnstoffgruppen. Dadurch verläuft die Hydrolyse der Iminogruppen rasch und vollständig. Der freigesetzte Aldehyd **ALD** weist keinen oder nur einen geringen, aminartigen Geruch auf. Er verursacht also keine oder höchstens eine geringe Geruchsbildung in einer Zusammensetzung wie beispielsweise einem Klebstoff, Dichtstoff oder Belag. Die Reaktion von gegenüber primären Aminen reaktiven Komponenten mit dem hydrolysierenden Iminosilan der Formel (II) muss nicht notwendigerweise über das freigesetzte Aminosilan **AS** der Formel (III) erfolgen. Selbstverständlich sind auch Reaktionen mit Zwischenstufen der Hydrolyse des Iminosilans zum Aminosilan möglich. Beispielsweise ist es denkbar, dass das hydrolysierende Iminosilan der Formel (II) in der Form eines Halbaminals direkt mit gegenüber Aminen reaktiven Komponenten reagiert.

Unter den beschriebenen Iminosilanen der Formel (II) besonders interessant sind Iminosilane der Formel (II a). 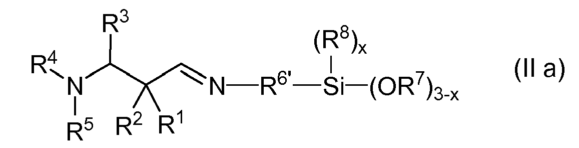 In der Formel (II a) steht
R^{6'} für einen linearen Alkylenrest mit 5 bis 7 C-Atomen, welcher eine oder 2 sekundäre Aminogruppen in der Kette aufweist, insbesondere für einen -(CH₂)₂-NH-(CH₂)₃- oder für einen -(CH₂)₂-NH-(CH₂)₂-NH-(CH₂)₃- Rest,
und R¹, R², R³, R⁴, R⁵, R⁷, R⁸ und x weisen die bereits genannten Bedeutungen auf.

Die speziellen, sowohl primäre als auch sekundäre Aminogruppen aufweisenden Aminosilane **AS,** die den Iminosilanen der Formel (II a) zugrunde liegen, sind besonders interessant als Haftvermittler, wobei aber ihre primären Aminogruppen zu Problemen bei der Lagerung in Zusammensetzungen, insbesondere in Estergruppen aufweisenden Zusammensetzungen, führen können. Diese Schwierigkeit kann beim Einsatz der Iminosilane der Formel (II a) als Haftvermittler auf elegante Weise umgangen werden.

Ein weiterer Gegenstand der Erfindung ist ein Addukt **AD** aus der Umsetzung von mindestens einem Aminosilan der Formel (I) mit mindestens einer Verbindung **VB,** die mindestens eine, bevorzugt mindestens zwei, Reaktivgruppen **RG** trägt, wobei die Reaktivgruppen **RG** ausgewählt sind aus der Gruppe bestehend aus Isocyanat-, Isothiocyanat-, Cyclocarbonat-, Epoxid-, Episulfid-, Aziridin-, Acryl-, Methacryl-, 1-Ethinylcarbonyl-, 1-Propinylcarbonyl-, Maleimid-, Citraconimid-, Vinyl-, Isopropenyl- und Allyl-Gruppen. Bevorzugt sind Isocyanat-, Epoxid-, Acryl-, Maleimid-, Vinyl-, Isopropenyl- und Allylgruppen. Besonders bevorzugt als Reaktivgruppe **RG** ist die Isocyanatgruppe und die Epoxidgruppe.

Mindestens eine sekundäre Aminogruppe eines Aminosilans der Formel (I) reagiert dabei in einer Additionsreaktion mit mindestens einer Reaktivgruppe **RG** der Verbindung **VB** zu einem Addukt **AD.**

Die Umsetzung kann so durchgeführt werden, dass die sekundären Aminogruppen des Aminosilans der Formel (I) stöchiometrisch oder im stöchiometrischen Überschuss gegenüber den Reaktivgruppen **RG** der Verbindung **VB** vorhanden sind, wobei Addukte **AD** mit mindestens einer, bevorzugt mindestens zwei, Silangruppen erhältlich sind, welche weitestgehend frei sind von Reaktivgruppen **RG.**

Die Umsetzung kann aber auch so durchgeführt werden, dass die Reaktivgruppen **RG** der Verbindung **VB** im stöchiometrischen Überschuss gegenüber den sekundären Aminogruppen des Aminosilans der Formel (I) vorhanden sind. Für den Fall, dass die Verbindung **VB** mindestens zwei Reaktivgruppen **RG** aufweist, sind auf diese Weise Addukte **AD** mit mindestens einer Reaktivgruppe **RG** und mindesten einer Silangruppe erhältlich.

Die Umsetzung zwischen dem Aminosilan der Formel (I) und der Verbindung **VB** zu einem Addukt **AD** erfolgt unter bekannten Bedingungen, wie sie für Reaktionen zwischen den an der jeweiligen Umsetzung beteiligten Reaktivgruppen **RG** typischerweise verwendet werden. Die Umsetzung erfolgt unter Verwendung eines Lösemittels oder bevorzugt lösemittelfrei. Gegebenenfalls können Hilfsstoffe wie beispielsweise Katalysatoren, Initiatoren oder Stabilisatoren mitverwendet werden. Die Umsetzung mit Isocyanatgruppen wird bevorzugt bei Raumtemperatur, die Umsetzung mit Epoxidgruppen bevorzugt bei erhöhter Temperatur, beispielsweise bei 40 bis 100 °C, durchgeführt.

Beispiele für geeignete Verbindungen **VB** sind
- monomere und/oder oligomere aliphatische, cycloaliphatische, arylaliphatische oder aromatische Polyisocyanate wie 1,4-Tetramethylendiisocyanat, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), 1,3,5-Tris-(isocyanatomethyl)-benzol, m- und p-Tetramethyl-1,3- und -1,4-xylylendiisocyanat (mund p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, 2,4- und 2,6-Toluylen-diisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris-(4-isocyanatophenyl)-methan, Tris-(4-isocyanatophenyl)-thiophosphat; Oligomere dieser Isocyanate enthaltend Uretdion-, Isocyanurat- oder Iminooxadiazindiongruppen; modifizierte Polyisocyanate enthaltend Ester-, Harnstoff-, Urethan-, Biuret-, Allophanat-, Carbodiimid-, Uretonimin- oder Oxadiazintriongruppen; sowie Isocyanatgruppen aufweisende Polyurethanpolymere, das heisst mehr als eine Isocyanatgruppe aufweisende Umsetzungsprodukte von Polyisocyanaten mit zwei- oder mehr Hydroxylgruppen aufweisenden Substanzen (so genannten "Polyolen"), wie beispielsweise mehrwertigen Alkoholen, Glykolen oder Aminoalkoholen, polyhydroxyfunktionellen Polyethern, Polyestern, Polyacrylaten, Polycarbonaten oder Polykohlenwasserstoffen, insbesondere Polyether, wie sie im Folgenden zur Herstellung von Isocyanatgruppen aufweisenden Polyurethanpolymeren **PUP** erwähnt sind;
- Polyepoxide wie Bis-(2,3-epoxycyclopentyl)ether, Polyglycidylether von mehrwertigen aliphatischen und cycloaliphatischen Alkoholen wie 1,4-Butandiol, Polypropylenglykolen und 2,2-Bis-(4-hydroxycyclohexyl)-propan; Polyglycidylether von mehrwertigen Phenolen wie Resorcinol, Bis-(4-hydroxyphenyl)-methan (Bisphenol-F), 2,2-Bis-(4-hydroxyphenyl)-propan (Bisphenol-A), 2,2-Bis-(4-hydroxy-3,5-dibromophenyl)-propan, 1,1,2,2-Tetrakis-(4-hydroxyphenyl)-ethan, Kondensationsprodukten von Phenolen mit Formaldehyd, die unter sauren Bedingungen erhalten werden, wie Phenolnovolaken und Kresolnovolaken, sowie mit diesen Alkoholen und Phenolen, oder mit Polycarbonsäuren wie beispielsweise dimeren Fettsäuren, oder einem Gemisch davon, vorverlängerte Polyglycidylether; Polyglycidylester von mehrwertigen Carbonsäuren wie Phthalsäure, Terephthalsäure, Tetrahydrophthalsäure und Hexahydrophthalsäure; N-Glycidyl-Derivate von Aminen, Amiden und heterocyclischen Stickstoffbasen wie N,N-Diglycidylanilin, N,N-Diglycidyltoluidin, N,N,O-Triglycidyl-4-aminophenol, N,N,N',N'-Tetraglycidyl-bis-(4-aminophenyl)-methan, Triglycidylcyanurat und Triglycidylisocyanurat;
- mehr als eine Acryl-, Methacryl- oder Acrylamidgruppe tragende Verbindungen wie Tris-(2-hydroxyethyl)-isocyanurat-tri(meth)acrylat, Tris-(2-hydroxyethyl)-cyanurat-tri(meth)acrylat, N,N',N"-Tris-(meth)acryloyl-perhydrotriazin; Acrylate und Methacrylate von aliphatischen Polyethern, Polyestern, Novolaken, Phenolen, aliphatischen oder cycloaliphatischen Alkoholen, Glykolen und Polyesterglykolen sowie mono- und polyalkoxylierten Derivaten der vorgenannten Verbindungen, beispielsweise Ethylenglykol-di(meth)acrylat, Tetraethylenglykol-di(meth)acrylat, Tripropylenglykol-di(meth)acrylat, Polyethylenglykol-di(meth)acrylat, Polypropylenglykol-di(meth)acrylat, 1,4-Butandiol-di(meth)acrylat, 1,6-Hexandiol-di(meth)acrylat, Neopentylglykol-di-(meth)acrylat, Trimethylolpropan-tri(meth)acrylat, Pentaerithritol-tetra(meth)-acrylat, Dipentaerithritol-tetra(meth)acrylat, Dipentaerithritol-penta(meth)-acrylat, Dipentaerithritol-hexa(meth)acrylat; Acryl- oder Methacryl-funktionelle Polybutadiene, Polyisoprene oder Block-copolymere davon; Addukte aus Polyepoxiden wie die oben genannten Epoxide mit Acryl- und Methacrylsäure; Polyurethan(meth)acrylate; Acrylamide wie N,N'-Methylen-bis-acrylamid;
- mehr als eine 1-Ethinylcarbonyl- oder 1-Propinylcarbonylgruppe tragende Verbindungen;
- mehr als eine Maleimid- oder Citraconimidgruppe tragende Verbindungen;
- mehr als eine Vinyl- und/oder Isopropenylgruppe tragende Vebindungen;
- mehr als eine Allylgruppe tragende Verbindungen;
- sowie heterofunktionelle, das heisst mindestens zwei verschiedene der vorgenannten Reaktivgruppen tragende, Verbindungen,
- sowie in Bezug auf die Reaktivgruppen **RG** monofunktionelle Verbindungen, insbesondere solche, welche zusätzlich eine Silangruppe tragen, wie insbesondere Isocyanatosilane, Epoxysilane und (Meth)acrylsilane, insbesondere 3-Isocyanatopropyltrimethoxysilan und 3-Glycidoxypropyltrimethoxysilan.

Bei der - zumindest partiellen - Hydrolyse der Addukte **AD** entstehen Verbindungen mit Silanolgruppen der Formel (IX), wie für Aminosilane der Formel (I) und Iminosilane der Formel (II) bereits beschrieben.

Derartige hydrolysierte oder partiell hydrolysierte Addukte **AD** mit Silanolgruppen der Formel (IX) sind sehr reaktiv und können sehr schnell weiterreagieren, auf die gleiche Weise wie vorgängig bereits beschrieben.

Als Verbindung **VB** besonders geeignet sind in einer Ausführungsform monomere und oligomere Polyisocyanate, Isocyanatosilane, Polyepoxide, Epoxysilane und (Meth)acrylgruppen aufweisende Verbindungen.

Addukte **AD** mit solchen Verbindungen **VB** sind insbesondere geeignet als Bestandteil von härtbaren Massen, wobei sie in den härtbaren Massen als Vernetzer und/oder als Haftvermittler und/oder als Beschleuniger und/oder als Trocknungsmittel wirken können, sowie als Bestandteil von Aktivatoren oder Primern.

Als Verbindung **VB** besonders geeignet sind in einer weiteren Ausführungsform mehr als eine Isocyanatgruppe aufweisende Umsetzungsprodukte von Polyisocyanaten mit Polyolen (auch Isocyanatgruppen aufweisende Polyurethanpolymere genannt).

Addukte **AD** mit solchen Verbindungen **VB** sind insbesondere geeignet als Bestandteil von härtbaren Massen, wobei sie in den härtbaren Massen als härtbares, silanfunktionelles Polymer einsetzbar sind.

Sowohl die Aminosilane der Formel (I) als auch die Iminosilane der Formel (II) als auch die Addukte **AD** sind vorteilhaft verwendbar als Haftvermittler und/oder Beschleuniger und/oder Trocknungsmittel, zum Beschichten von Oberflächen oder als Bestandteil von härtbaren Massen, Aktivatoren oder Primern.

Ein weiterer Gegenstand der Erfindung sind Zusammensetzungen enthaltend mindestens ein Aminosilan der Formel (I) und/oder mindestens ein Iminosilan der Formel (II) und/oder mindestens ein Addukt **AD.**

In einer Ausführungsform ist eine solche Zusammensetzung ein Aktivator, welcher zusätzlich mindestens ein Lösemittel, und optional weitere Bestandteile wie insbesondere Katalysatoren, weitere Silane, Titanate und Zirkonate enthält. Ein Aktivator wird typischerweise verwendet, um Substratoberflächen zu reinigen und diese gleichzeitig für den nachfolgenden Auftrag einer härtbaren Masse so vorzubereiten, dass eine verbesserte Haftung zwischen Substrat und Masse entsteht. Die Inhaltsstoffe in einem Aktivator sind typischerweise so dosiert, dass nach dem Verdampfen der Lösemittel kein geschlossener Film auf der Substratoberfläche zurückbleibt.

In einer weiteren Ausführungsform ist eine solche Zusammensetzung ein Primer, welcher zusätzlich mindestens ein Lösemittel und mindestens eine filmbildende Komponente, sowie optional weitere Bestandteile wie insbesondere Katalysatoren, Füllstoffe, weitere Silane, Titanate, Zirkonate, Netzmittel und weitere Additive, enthält. Als filmbildende Komponenten geeignet sind inbesondere mono- und/oder oligomere aliphatische, cycloaliphatische, arylaliphatische oder aromatische Polyisocyanate, Isocyanat- und/oder Silangruppen aufweisende Polyurethanpolymere, Epoxidharze sowie die beschriebenen Addukte **AD.** Der Primer wird üblicherweise so appliziert, dass nach dem Verdampfen der Lösemittel ein geschlossener Film in einer Schichtdicke im Bereich von einigen Mikrometern bis zu einigen Hundert Mikrometern auf dem Substrat verbleibt. Ein Primer wird typischerweise dazu verwendet, die Haftung zwischen Substrat und Masse zu verbessern, indem der Primerfilm sowohl zum Substrat als auch zu einer auf den Primerfilm aufgebrachten härtbaren Masse Haftung aufbauen kann.

Als Lösemittel für solche Aktivatoren oder Primer geeignet sind insbesondere Alkohole wie Methanol, Ethanol, Isopropanol; Ketone wie Aceton, Methylethylketon, Diisobutylketon, Acetylaceton, Mesityloxid, Cyclohexanon, Methylcyclohexanon; Acetate wie Ethylacetat, Propylacetat, Butylacetat; Formiate, Propionate und Malonate wie Diethylmalonat; Ether wie Dialkylether, Ketonether und Esterether, beispielsweise Diisopropylether, Diethylether, Dibutylether, Diethylenglykoldiethylether und Ethylenglykoldiethylether; aliphatische und aromatische Kohlenwasserstoffe wie Toluol, Xylol, Heptan, Octan und Erdölfraktionen wie Naphtha, White Spirit, Petrolether und Benzin, beispielsweise Solvesso™-Typen (von Exxon); halogenierte Kohlenwasserstoffe wie Methylenchlorid; Carbonate wie beispielsweise Propylencarbonat; Lactone wie beispielsweise Butyrolacton; N-alkylierte Lactame wie beispielsweise N-Methylpyrrolidon; sowie Wasser.

In einer weiteren Ausführungsform ist eine solche Zusammensetzung eine härtbare Masse in Form einer Isocyanatgruppen aufweisenden Polyurethanzusammensetzung, oder in Form einer Epoxidharz-Zusammensetzung, oder in Form einer silanfunktionellen härtbaren Masse, welche hauptsächlich über die Hydrolyse und Kondensation von Silangruppen aushärtet.

Solche härtbaren Massen können insbesondere als Vergussmassen, Dichtstoffe, Klebstoffe, Beläge, Beschichtungen und Anstriche für Bau- und Industrieanwendungen eingesetzt werden, beispielsweise als Elektroisolationsmassen, Spachtelmassen, Fugendichtstoffe, Montageklebstoffe, Karrosserieklebstoffe, Scheibenklebstoffe, Sandwichelementklebstoffe, Kaschierklebstoffe, Laminatklebstoffe, Verankerungsklebstoffe, Bodenbeläge und -beschichtungen, Balkon- und Dachbeschichtungen, Betonschutzbeschichtungen, Parkhausbeschichtungen sowie Schutzanstriche gegen Korrosion.

Der Einsatz von Silanen in härtbaren Massen, Aktivatoren und Primern ist im Stand der Technik weit verbreitet, wobei die Silane als Vernetzer und/oder als Haftvermittler und/oder als Beschleuniger und/oder als Trocknungsmittel und/oder als härtbares Polymer wirken können. Der Umstand, dass die Aminosilane der Formel (I) eine zusätzliche Aminogruppe aufweisen, macht sie für solche Anwendungen besonders interessant.

Unter den beschriebenen Addukten **AD** besonders interessant sind silanfunktionelle Polymere **SP,** welche aus der Umsetzung von mindestens einem Isocyanatgruppen aufweisenden Polyurethanpolymer **PUP** mit mindestens einem Aminosilan der Formel (I) erhältlich sind.

Dafür bevorzugt sind Aminosilane der Formel (I) mit nur einer sekundären Aminogruppe, also Aminosilane der Formel (I), bei welchen R⁵ nicht für ein Wasserstoffatom steht und bei welchen R⁶ keine sekundären Aminogruppen aufweist.

Die sekundären Aminogruppen der Aminosilane der Formel (I) werden bevorzugt stöchiometrisch oder in leichtem stöchiometrischem Überschuss gegenüber den Isocyanatgruppen der Polyurethanpolymere **PUP** eingesetzt.

Bevorzugt sind silanfunktionelle Polymere **SP,** welche frei sind von Isocyanatgruppen.

Ein zur Herstellung eines silanfunktionellen Polymers **SP** geeignetes Isocyanatgruppen aufweisendes Polyurethanpolymer **PUP** ist insbesondere erhältlich aus der Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO/OH-Verhältnis" wird das Verhältnis der Anzahl der eingesetzten Isocyanatgruppen zu der Anzahl der eingesetzten Hydroxylgruppen verstanden. Bevorzugt verbleibt im Polyurethanpolymer **PUP** nach der Umsetzung aller Hydroxylgruppen des Polyols ein Gehalt an freien Isocyanatgruppen von 0.25 bis 5 Gewichts-%, besonders bevorzugt von 0.3 bis 2.5 Gewichts-%.

Gegebenenfalls kann das Polyurethanpolymer **PUP** unter Mitverwendung von Weichmachern hergestellt werden, wobei die verwendeten Weichmacher keine gegenüber Isocyanaten reaktive Gruppen enthalten.

Bevorzugt sind Polyurethanpolymere **PUP** mit dem genannten Gehalt an freien Isocyanatgruppen, welche aus der Umsetzung von Diisocyanaten mit hochmolekularen Diolen in einem NCO/OH-Verhältnis von 1.5 bis 2 erhalten werden.

Als Polyole für die Herstellung eines Polyurethanpolymers **PUP** können insbesondere die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten. Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol. Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen. Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie insbesondere polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.

Als Polyole bevorzugt sind Polyether-, Polyester-, Polycarbonat- und Polyacrylatpolyole, bevorzugt Di- und Triole. Besonders bevorzugt sind Polyetherdiole, insbesondere Polyoxypropylen- und Polyoxypropylenpolyoxyethylendiole. Am meisten bevorzugt sind hochmolekulare Polyoxypropylendiole mit einem Ungesättigtheitsgrad tiefer als 0.02 mEq/g und mit einem Molekulargewicht im Bereich von 4000 - 30'000 g/mol, insbesondere von 8'000 - 30'000 g/mol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung eines Polyurethanpolymers **PUP** mitverwendet werden. Ebenso können kleine Mengen an Polyolen mit einer mittleren OH-Funktionalität von mehr als 3 mitverwendet werden, beispielsweise Zuckerpolyole.

Als Polyisocyanat für die Herstellung eines Isocyanatgruppen aufweisenden Polyurethanpolymers **PUP** werden aromatische oder aliphatische Polyisocyanate, insbesondere die Diisocyanate, eingesetzt.

Als aromatische Polyisocyanate eignen sich insbesondere monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Tris-(4-isocyanatophenyl)-methan, Tris-(4-isocyanatophenyl)-thiophosphat, sowie beliebige Mischungen der vorgenannten Isocyanate. Bevorzugt sind MDI und TDI.

Als aliphatische Polyisocyanate eignen sich insbesondere monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), 1,3,5-Tris-(isocyanatomethyl)-benzol, Bis-(1-Isocyanato-1-methyl-ethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',-α",α"-Hexamethyl-1,3,5-mesitylentriisocyanat, sowie beliebige Mischungen der vorgenannten Isocyanate. Bevorzugt sind HDI und IPDI.

Ein silanfunktionelles Polymer **SP** weist Endgruppen der Formel (X) auf.

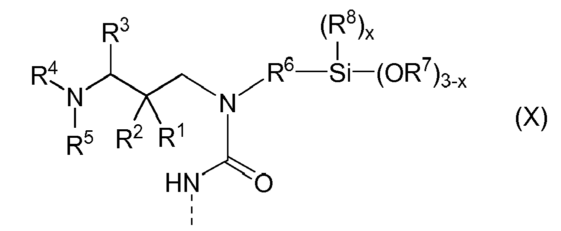

In der Formel (X) weisen R¹, R², R³, R⁴, R⁵, R⁶, R⁷, R⁸ und x die bereits genannten Bedeutungen auf.

Ein silanfunktionelles Polymer **SP** ist unter Ausschluss von Feuchtigkeit lagerfähig. Bei Kontakt mit Feuchtigkeit hydrolysieren die Silangruppen des Polymers **SP,** worauf dieses zu einem vernetzten Kunststoff aushärtet. Somit beschreibt die vorliegende Erfindung auch einen vernetzten Kunststoff, welcher durch die Reaktion mindestens eines silanfunktionellen Polymers **SP** mit Feuchtigkeit erhalten wird.

Ein silanfunktionelles Polymer **SP** weist verschiedene vorteilhafte Eigenschaften auf. Es ist auf einfache Weise aus den beschriebenen Aminosilanen der Formel (I) zugänglich und weist auch bei einem Überschuss an Aminosilan wenig Geruch auf. Seine Viskosität ist relativ niedrig, deutlich niedriger als die eines entsprechenden silanfunktionellen Polymers, das unter Verwendung eines primären Aminosilans hergestellt wurde. Bei Kontakt mit Feuchtigkeit vernetzt es rasch und vollständig zu einem ausgehärteten Polymer mit ausgezeichneten Eigenschaften, insbesondere einer guten Elastizität bei hoher Festigkeit und hoher Dehnbarkeit und einer überraschend guten thermischen Beständigkeit, beispielsweise bei einer Temperaturbelastung von 90 °C. Die thermische Beständigkeit ist derjenigen von ausgehärteten silanfunktionellen Polymeren, die unter Verwendung von aus dem Stand der Technik bekannten sekundären Aminosilanen hergestellt wurden, deutlich überlegen.

Ein silanfunktionelles Polymer **SP** ist besonders geeignet als Bestandteil von härtbaren Massen, insbesondere zur Formulierung von silanfunktionellen feuchtigkeitshärtenden Zusammensetzungen.

Ein weiterer Gegenstand der Erfindung ist eine feuchtigkeitshärtende Zusammensetzung enthaltend mindestens ein silanfunktionelles Polymer **SP,** wie es vorgängig beschrieben wurde, und mindestens einen weiteren Bestandteil.

Üblicherweise ist das silanfunktionelle Polymer **SP** in einer Menge von 10 - 80 Gewichts-%, bevorzugt in einer Menge von 15 - 50 Gewichts-%, bezogen auf die feuchtigkeitshärtende Zusammensetzung, vorhanden.

Als weitere Bestandteile können unter anderem die folgenden Hilfs- und Zusamtzmittel vorhanden sein:
- Silane, welche als Haftvermittler, Vernetzer, Trocknungsmittel und/oder Katalysatoren wirken können, wie insbesondere weitere Aminosilane, insbesondere die beschriebenen Aminosilane der Formel (I), die zu deren Herstellung erwähnten Aminosilane **AS** mit primären Aminogruppen und weitere Aminosilane mit sekundären oder tertiären Aminogruppen, insbesondere N-Phenyl-, N-Cyclohexyl- und N-Alkylaminosilane, weiterhin Mercaptosilane, Epoxysilane, Vinylsilane, (Meth)acrylsilane, Isocyanatosilane, Carbamatosilane, Alkylsilane, S-(Alkylcarbonyl)-mercaptosilane und Iminosilane, sowie oligomere Formen dieser Silane, insbesondere 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Isocyanatopropyltrimethoxysilan, 3-Ureidopropyltrimethoxysilan, 3-Chloropropyltrimethoxysilan, Vinyltrimethoxysilan, oder die entsprechenden Organosilane mit Ethoxygruppen anstelle der Methoxygruppen, sowie oligomere Formen dieser Silane;
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester oder Polybutene;
- Reaktivverdünner und Vernetzer, beispielsweise silanfunktionelle Oligo- und Polymere, natürliche Harze, Fette oder Öle wie Kolophonium, Schellack, Leinöl, Rizinusöl und Sojaöl;
- nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- Lösemittel;
- anorganische und organische Füllstoffe, insbesondere gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, Russ inklusive industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, beispielsweise Titandioxid oder Eisenoxide;
- Katalysatoren, insbesondere Organozinnverbindungen wie insbesondere Dibutylzinndichlorid, Dibutylzinnoxid, Dibutylzinndiacetat, Dibutylzinndilaurat, Dibutylzinndiacetylacetonat, weitere Dibutylzinndicarboxylate, Dioctylzinndicarboxylate wie insbesondere Dioctylzinndilaurat, Monobutylzinntrichlorid, Zinn(II)-octoat, Alkylzinnthioester, weiterhin Verbindungen von Zink, Mangan, Eisen, Chrom, Cobalt, Kupfer, Nickel, Molybdän, Blei, Cadmium, Quecksilber, Antimon, Vanadium, Titan, Zirconium oder Kalium, sowie weiterhin Amine, Amidine und Guanidine, insbesondere N-Ethyl-diisopropylamin, N,N,N',N'-Tetramethyl-alkylendiamine, Bis-(N,N-diethylaminoethyl)-adipat, Tris-(3-dimethylaminopropyl)-amin, 1,4-Diazabicyclo[2.2.2]octan (DABCO), 1,8-Diazabicyclo[5.4.0]undec-7-en (DBU), 1,5-Diazabicyclo-[4.3.0]non-5-en (DBN), N,N'-Dimethylpiperazin, 1,1,3,3-Tetramethylguanidin, stickstoffaromatische Verbindungen wie 4-Dimethylamino-pyridin, N-Methylimidazol, N-Vinylimidazol oder 1 ,2-Dimethylimidazol; organische Ammoniumverbindungen oder alkoxylierte tertiäre Amine; sowie weiterhin Kombinationen der genannten Verbindungen, insbesondere Kombinationen verschiedener Metallverbindungen oder Kombinationen von Metallverbindungen und stickstoffhaltigen Verbindungen.
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Trocknungsmittel, wie insbesondere Tetraethoxysilan, Vinyltrimethoxysilan, und Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, Calciumoxid oder Molekularsiebe;
- Stabilisatoren gegen Oxidation, Wärme, Licht und UV-Strahlung;
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)-phosphat, Tris(2-ethylhexyl)phosphat, Tris(chlorisopropyl)phosphat, Tris-(chlorpropyl)phosphat, isopropyliertes Triphenylphosphat, Mono-, Bis- und Tris(isopropylphenyl)phosphate unterschiedlichen Isopropylierungsgrades, Resorcinol-bis(diphenylphosphat), Bisphenol-A-bis(diphenylphosphat) und Ammoniumpolyphosphate;
- oberflächenaktive Substanzen, wie insbesondere Netzmittel, Verlaufsmittel, Entlüftungsmittel oder Entschäumer;
- Biozide, wie beispielsweise Algizide, Fungizide oder das Pilzwachstum hemmende Substanzen;
sowie weitere üblicherweise in feuchtigkeitshärtenden Zusammensetzungen eingesetzte Substanzen.

Es ist vorteilhaft, darauf zu achten, dass die weiteren Bestandteile die Lagerstabilität der feuchtigkeitshärtenden Zusammensetzung nicht beeinträchtigen, das heisst, dass sie während der Lagerung die zur Vernetzung führende Reaktion der in der Zusammensetzung enthaltenen Silangruppen nicht in signifikantem Ausmass auslösen dürfen. Insbesondere bedeutet dies, dass solche weiteren Komponenten bevorzugt kein oder höchstens Spuren von Wasser enthalten. Es kann sinnvoll sein, gewisse Komponenten vor dem Einmischen in die Zusammensetzung chemisch oder physikalisch zu trocknen.

Bevorzugt enthält die feuchtigkeitshärtende Zusammensetzung Weichmacher, Füllstoffe, Silane und/oder Katalysatoren.

Die feuchtigkeitshärtende Zusammensetzung kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität, der Auspressmenge oder der Auspresskraft ermittelt.

Die Zusammensetzung enthält vorzugsweise keine freien Isocyanatgruppen. Eine derartige isocyanatfreie Zusammensetzung ist vom toxikologischen Standpunkt her vorteilhaft.

Die feuchtigkeitshärtende Zusammensetzung kann in Form einer einkomponentigen oder in Form einer zweikomponentigen Zusammensetzung vorliegen.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist, sich also in ihren Anwendungs- oder Gebrauchseigenschaften durch die Lagerung nicht oder nur unwesentlich verändert, und welche mit Feuchtigkeit härtbar ist.

Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden und welche jeweils für sich bei Raumtemperatur lagerstabil sind. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der feuchtigkeitshärtenden Zusammensetzung auf mindestens einen Festkörper oder Artikel kommen die Silangruppen des Polymers und gegebenenfalls vorhandener weiterer Silane in Kontakt mit Feuchtigkeit. Die Silangruppen haben die Eigenschaft, bei Kontakt mit Feuchtigkeit zu hydrolysieren. Dabei bilden sich Organosilanole (Silicium-organische Verbindungen enthaltend eine oder mehrere Silanolgruppen, Si-OH-Gruppen) und, durch nachfolgende Kondensationsreaktionen, Organosiloxane (Silicium-organische Verbindungen enthaltend eine oder mehrere Siloxangruppen, Si-O-Si-Gruppen). Als Ergebnis dieser Reaktionen, welche durch den Einsatz von Katalysatoren beschleunigt werden können, härtet die Zusammensetzung schliesslich aus; dieser Prozess wird auch als Vernetzung bezeichnet. Weiterhin können Silanolgruppen beispielsweise mit Hydroxylgruppen des Substrates, auf welches die feuchtigkeitshärtende Zusammensetzung appliziert ist, kondensieren, wodurch bei der Aushärtung eine ausgezeichnete Haftung der Zusammensetzung auf dem Substrat ausgebildet werden kann. Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene feuchtigkeitshärtende Zusammensetzung härtet bei Kontakt mit Feuchtigkeit aus. Somit beschreibt die vorliegende Erfindung auch eine ausgehärtete Zusammensetzung, welche durch die Reaktion mindestens eines silanfunktionellen Polymers **SP** mit Feuchtigkeit erhalten wird.

Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt demnach ein Mass für die Aushärtungsgeschwindigkeit dar. Die Zusammensetzung verfügt im ausgehärteten Zustand über eine gute Elastizität bei hoher Festigkeit und hoher Dehnbarkeit und eine überraschend gute thermische Stabilität, beispielsweise bei einer Temperaturbelastung von 90 °C. Dadurch eignet sie sich für eine Vielzahl von Verwendungen, insbesondere als Faserverbundwerkstoff (Composite), elastische Vergussmasse, Dichtstoff, Klebstoff, Belag, Beschichtung oder Anstrich für Bau- und Industrieanwendungen, beispielsweise als Elektroisolationsmassen, Spachtelmassen, Fugendichtstoffe, Montageklebstoffe, Karrosserieklebstoffe, Scheibenklebstoffe, Sandwichelementklebstoffe, Kaschierklebstoffe, Laminatklebstoffe, Verankerungsklebstoffe, Bodenbeläge und -beschichtungen, Balkon- und Dachbeschichtungen, Betonschutzbeschichtungen, Parkhausbeschichtungen sowie Schutzanstriche gegen Korrosion, Versiegelung, Anstrich, Lack und Primer.

Die Zusammensetzung eignet sich weiterhin für eine Anwendung als geschäumte Masse, insbesondere solche Zusammensetzungen, welche silanfunktionelle Polymere -**SP** abgeleitet von Aminosilanen der Formel (I) mit R⁶ = Methylen enthalten, welche also sogenannte α-Amino-Silangruppen aufweisen.

Geeignete Anwendungen sind beispielsweise das Verkleben von Bauteilen im Hoch- oder Tiefbau und bei der Fertigung oder Reparatur von industriellen Gütern oder Konsumgütern, insbesondere von Fenstern, Haushaltmaschinen oder Transportmitteln, wie Fahrzeugen zu Wasser oder zu Lande, bevorzugt Automobile, Busse, Lastkraftwagen, Züge oder Schiffe; das Abdichten von Fugen, Nähten oder Hohlräumen in der industriellen Fertigung oder Reparatur, oder im Hoch- oder Tiefbau; sowie das Beschichten von diversen Substraten, beispielsweise als Bodenbelag für beispielsweise Büros, Wohnbereiche, Spitäler, Schulen, Lagerhallen und Parkgaragen, oder als flüssig applizierbare Abdichtung eines Bauwerks, insbesondere als Dachfolie.

In einer bevorzugten Ausführungsform wird die feuchtigkeitshärtende Zusammensetzung als elastischer Klebstoff oder Dichtstoff eingesetzt.

Für eine Anwendung der Zusammensetzung als Dichtstoff für beispielsweise Fugen im Hoch oder Tiefbau, oder für eine Anwendung als Klebstoff für elastische Verklebungen, beispielsweise im Fahrzeugbau, weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters.

Ein Dichtstoff oder Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.

Ein Klebstoff für elastische Verklebungen, beispielsweise im Fahrzeugbau, wird bevorzugt in Form einer Raupe mit einer im Wesentlichen runden oder dreieckigen Querschnittsfläche aufgetragen.

In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff durch Kontakt mit Feuchtigkeit aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.

In der Anwendung als Dichtstoff wird die Zusammensetzung zwischen die Substrate **S1** und **S2** appliziert und anschliessend erfolgt die Aushärtung der Zusammensetzung durch Kontakt mit Feuchtigkeit. Üblicherweise wird der Dichtstoff in eine Fuge eingepresst.

In beiden Anwendungen kann das Substrat **S1** gleich oder verschieden von Substrat **S2** sein.

Geeignete Substrate **S1** oder **S2** sind insbesondere
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

Die feuchtigkeitshärtende Zusammensetzung verfügt über eine relativ tiefe Grundviskosität, da das silanfunktionelle Polymer **SP** eine relativ tiefe Viskosität aufweist, was das Einstellen von guten Applikationseigenschaften ermöglicht. Die feuchtigkeitshärtende Zusammensetzung härtet schnell aus und verfügt im ausgehärteten Zustand über eine gute Elastizität bei hoher Festigkeit und hoher Dehnbarkeit und über eine überraschend gute thermische Stabilität, beispielsweise bei einer Temperaturbelastung von 90 °C. Im Vergleich mit Systemen nach dem Stand der Technik, welche anstelle eines silanfunktionellen Polymers **SP** ein silanfunktionelles Polymer nach dem Stand der Technik enthalten, ist die thermische Stabilität im ausgehärteten Zustand deutlich besser.

### Beispiele

### 1. Beschreibung der Messmethoden

Der **Amingehalt,** das heisst der totale Gehalt an freien Aminogruppen und blockierten Aminogruppen (Aldiminogruppen) in den hergestellten Verbindungen, wurde titrimetrisch bestimmt (mit 0.1N HClO₄ in Eisessig, gegen Kristallviolett) und ist stets angegeben in mmol N/g.

**Infrarotspektren** wurden als unverdünnte Filme auf einem mit horizontaler ATR-Messeinheit mit ZnSe-Kristall ausgestatteten FT-IR Gerät 1600 von Perkin-Elmer gemessen; die Absorptionsbanden sind in Wellenzahlen (cm⁻¹) angegeben (Messfenster: 4000-650 cm⁻¹); der Zusatz sh weist auf eine als Schulter erscheinende Bande hin.

**¹H-NMR-Spektren** wurden auf einem Spektrometer des Typs Bruker DPX-300 bei 300.13 MHz gemessen; die chemischen Verschiebungen δ sind angegeben in ppm relativ zu Tetramethylsilan (TMS), Kopplungskonstanten J sind angegeben in Hz. Echte und Pseudo-Kopplungsmuster wurden nicht unterschieden.

Die **Viskositäten** wurden auf einem Kegel-Platten-Viskosimeter Rheotec RC30 (Kegeldurchmesser 50 mm, Kegelwinkel 1°, Kegelspitze-Platten-Abstand 0.05 mm, Scherrate 10-100 s⁻¹) gemessen.

### 2. Herstellung von Aldehyden der Formel (IV)

### 2,2-Dimethyl-3-(N-morpholino)-propanal

In einem Rundkolben wurden unter Stickstoffatmosphäre 83.1 g (1.00 mol) 36%iger wässriger Formaldehyd und 75.0 g (1.04 mol) Isobutyraldehyd vorgelegt. Unter gutem Rühren und Eiskühlung wurden aus einem Eintropftrichter langsam 87.1 g (1.00 mol) Morpholin zugetropft, wobei darauf geachtet wurde, dass die Temperatur der Reaktionsmischung nicht über 20 °C anstieg. Nach erfolgter Zugabe liess man eine Stunde bei Raumtemperatur rühren. Die entstandene Reaktionsmischung wurde im Ölbad bei 100 °C während 18 Stunden unter Rückfluss gerührt, auf Raumtemperatur abgekühlt und die Phasen im Scheidetrichter getrennt. Die organische Phase wurde ohne weitere Aufbereitung im Vakuum fraktioniert. Das Produkt destillierte bei einer Kopftemperatur 97 °C und einem Druck von 14 mbar.

### 2,2-Dimethyl-3-dimethylamino-propanal

Auf die gleiche Weise wie für 2,2-Dimethyl-3-(N-morpholino)-propanal beschrieben wurden 83.1 g (1.00 mol) 36%iger wässriger Formaldehyd, 79.3 g (1.10 mol) Isobutyraldehyd und 112.7 g (1.00 mol) 40%iges wässriges Dimethylamin miteinander umgesetzt. Bei der Reinigung destillierte das Produkt bei einer Kopftemperatur von 94 °C und einem Druck von 16 mbar.

### 3. Herstellung von Iminosilanen der Formel (II)

### Allgemeine Herstellvorschrift (Iminosilane)

In einem Rundkolben wurde ein Aldehyd unter Stickstoffatmosphäre vorgelegt, 2-Propanamin zugetropft, während 30 Minuten bei Raumtemperatur gerührt und anschliessend auf 70 bis 100 °C aufgeheizt und flüchtige Anteile, insbesondere Wasser und überschüssiges Amin, unter Vakuum entfernt. Zur Umiminierung wurde anschliessend bei Raumtemperatur ein Aminosilan zugegeben, die Reaktionsmischung unter gutem Rühren auf 80 °C aufgeheizt und der Druck schrittweise auf 20 - 50 mbar reduziert, bis keine Blasen mehr entstanden, dann die Temperatur weiter auf 120 °C erhöht und der Druck weiter auf 0.05 mbar reduziert, bis wiederum keine Blasen mehr entstanden. Das erhaltene Iminosilan wurde auf Raumtemperatur abgekühlt und unter Ausschluss von Feuchtigkeit aufbewahrt.

### Beispiel 1: Iminosilan I-1

### 3-(2,2-dimethyl-3-(N-morpholino)-propylideneamino)-propyl-trimethoxysilan

Gemäss der allgemeinen Herstellvorschrift (Iminosilane) wurden 17.98 g 2,2-Dimethyl-3-(N-morpholino)-propanal, 7.45 g 2-Propanamin und 17.93 g 3-Aminopropyl-trimethoxysilan umgesetzt. Ausbeute: 32.2 g eines klaren, gelblichen Öls mit einem Amingehalt von 9.29 mmol N/g und einer Reinheit von 92 %.
FT-IR: 2955, 2938, 2920 sh, 2837, 2809 sh, 1664 (ν_{C=N}), 1454, 1410, 1396, 1375, 1360, 1345 sh, 1318, 1303, 1282, 1267, 1189, 1135, 1116, 1080, 1036, 1012, 930, 864, 815, 801, 775, 677.
¹H-NMR (CDCl₃, 300 K): δ 7.54 (*t*, *J* = 1.2, 1 H, CH=N), 3.64 *(t, J* = 4.7, 4 H, OC*H*₂CH₂N), 3.57 (*s*, 9 H, Si(OCH₃)₃), 3.35 (*t×d*, *J* = 7.0/1.1, 2 H, CH=NC*H*₂), 2.46 (*t, J* = 4.7, 4 H, OCH₂C*H*₂N), 2.34 (s, 2 H, NC*H*₂C(CH₃)₂), 1.68 (*m*, 2 H, CH=NCH₂C*H*₂CH₂Si), 1.06 (*s*, 6 H, C(CH₃)₂), 0.60 (*m*, 2 H, CH=NCH₂CH₂C*H*₂Si).

### Beispiel 2: Iminosilan I-2

### 3-(2,2-dimethyl-3-(N,N-dimethylamino)-propylideneamino)-propyl-trimethoxysilan

Gemäss der allgemeinen Herstellvorschrift (Iminosilane) wurden 13.57 g 2,2-Dimethyl-3-dimethylamino-propanal, 7.45 g 2-Propanamin und 17.93 g 3-Aminopropyl-trimethoxysilan umgesetzt. Das Produkt wurde nach der Herstellung destilliert, um oligomere Anteile zu entfernen. Ausbeute: 28.4 g eines klaren, farblosen Öls mit einem Amingehalt von 6.61 mmol N/g und einer Reinheit von 95 %.
FT-IR: 2938, 2837, 2828, 2766, 1665 (ν_{C=N}), 1455, 1411, 1388, 1363, 1342, 1301, 1264, 1189, 1082, 1042, 906, 872, 844, 814, 775, 676. ¹H-NMR (CDCl₃, 300 K): δ 7.57 (*t*, *J* = 1.2, 1 H, CH=N), 3.56 (s, 9 H, Si(OCH₃)₃), 3.37 (*t*×*d*, *J* = 7.0/1.2, 2 H, CH=NC*H*₂), 2.32 (s, 2 H, NC*H*₂C(CH₃)₂), 2.23 (s, 6 H, N(CH₃)₂), 1.69 (*m*, 2 H, CH=NCH₂C*H*₂CH₂Si), 1.07 (s, 6 H, C(CH₃)₂), 0.62 (*m*, 2 H, CH=NCH₂CH₂C*H*₂Si).

### Beispiel 3: Iminosilan I-3

### 3-(2,2-dimethyl-3-(N,N-dimethylamino)-propylideneamino)-propyl-triethoxysilan

Gemäss der allgemeinen Herstellvorschrift (Iminosilane) wurden 13.57 g g 2,2-Dimethyl-3-dimethylamino-propanal, 7.45 g 2-Propanamin und 22.14 g 3-Aminopropyl-triethoxysilan umgesetzt. Ausbeute: 32.3 g eines klaren, farblosen Öls mit einem Amingehalt von 5.97 mmol N/g und einer Reinheit von 98 %.
FT-IR: 2970, 2926, 2882, 2817, 2765, 1883 br, 1665 (ν_{C=N}), 1466 sh, 1454, 1442, 1410, 1389, 1364, 1341, 1296, 1264, 1250 sh, 1181 sh, 1165, 1101, 1075, 1042, 993, 954, 867, 845, 809 sh, 791 sh, 774, 678. ¹H-NMR (CDCl₃, 300 K): δ 7.57 (*t*, *J* = 1.2, 1 H, CH=N), 3.81 (*q, J* = 7.0, 6 H, Si(OC*H*₂CH₃)₃), 3.37 (*t*×*d, J* = 7.0/1.2, 2 H, CH=NC*H*₂), 2.32 (s, 2 H, NC*H*₂C(CH₃)₂), 2.23 (s, 6 H, N(CH₃)₂), 1.70 (*m*, 2 H, CH=NCH₂C*H*₂CH₂Si), 1.22 (*t*, *J* = 7.0, 9 H, Si(OCH₂C*H*₃)₃), 1.07 (*s*, 6 H, C(CH₃)₂), 0.60 (*m*, 2 H, CH=NCH₂CH₂C*H*₂Si).

### Beispiel 4: Iminosilan I-4

### N-(2-(2,2-dimethyl-3-(N-morpholino)-propylideneamino)-ethyl)-3-aminopropyl-trimethoxysilan)

Gemäss der allgemeinen Herstellvorschrift (Iminosilane) wurden 17.98 g 2,2-Dimethyl-3-(N-morpholino)-propanal, 7.45 g 2-Propanamin und 22.24 g N-(2-Aminoethyl)-3-aminopropyl-trimethoxysilan umgesetzt. Ausbeute: 36.8 g eines klaren, gelbliches Öls mit einem Amingehalt von 8.04 mmol N/g und einer Reinheit von 95 %.
FT-IR: 3310 (ν_{NH}), 2941, 2888, 2865 sh, 2837, 2802, 1664 (ν_{C=N}), 1454, 1410, 1395, 1374, 1358, 1345, 1315, 1281, 1265, 1189, 1133 sh, 1114, 1079, 1036, 1011, 922, 882, 864, 812, 805, 776 sh, 758 sh.
¹H-NMR (CDCl₃, 300 K): δ 7.61 (*t, J* = 1.2, 1 H, CH=N), 3.64 *(t, J* = 4.6, 4 H, OC*H*₂CH₂N), 3.57 (*s*, 9 H, Si(OCH₃)₃), 3.49 (*t*×*d, J* = 4.8/1.2, 2 H, CH=NC*H*₂), 2.81 *(t, J* = 4.8, 2 H, CH=NCH₂C*H*₂NH), 2.62 *(t, J* = 7.3, 2 H, NHC*H*₂CH₂CH₂Si), 2.47 (*t*, *J* = 4.6, 4 H, OCH₂C*H*₂N), 2.35 (*s*, 2 H, NC*H*₂C(CH₃)₂), 1.59 (*m*, 3 H, NHCH₂C*H*₂CH₂Si und NH), 1.06 (s, 6 H, C(CH₃)₂), 0.64 (*m*, 2 H, NHCH₂CH₂C*H*₂Si).

### 4. Herstellung von Aminosilanen der Formel (I)

### Allgemeine Herstellvorschrift (Hydrierung)

In einem Rundkolben wurde ein Iminosilan in ausreichend Isopropanol gelöst und bei einem Wasserstoff-Druck von 80 bar, einer Temperatur von 80 °C und einem Fluss von 3 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die Lösung im Vakuum bei 80 °C eingeengt.

### Beispiel 5: Aminosilan A-1

### 3-(2,2-dimethyl-3-(N-morpholino)-propylamino)-propyl-trimethoxysilan

Gemäss der allgemeinen Herstellvorschrift (Hydrierung) wurden 10 g Iminosilan ***I-1*** aus Beispiel 1 hydriert. Es wurde ein klares, gelbes, geruchloses Öl mit einem Amingehalt von 5.93 mmol N/g erhalten, das für längere Zeit ohne Zersetzung gelagert werden konnte.
FT-IR: 2940m, 2889m, 2837m, 2800m, 2677vw, 1465m sh, 1455m, 1411vw, 1396vw, 1373w, 1358w, 1318w, 1305w, 1283w, 1264w, 1190s, 1114s, 1080vs, 1037m, 1011 s, 932w, 863s, 814s sh, 804s, 782s, 681 w.
¹H-NMR (CDCl₃, 300 K): δ 3.66 (*t*, *J* = 4.6, 4 H, OC*H*₂CH₂N), 3.57 (s, 9 H, Si(OCH₃)₃), 2.57 *(t, J* = 7.2, 2 H, NHC*H*₂CH₂CH₂Si), 2.51 *(t, J* = 4.6, 4 H, OCH₂C*H*₂N), 2.40 (s, 2 H, NC*H*₂C(CH₃)₂), 2.17 (*s*, 2 H, NHC*H*₂C(CH₃)₂), 1.58 (*m*, 2 H, NHCH₂C*H*₂CH₂Si), 1.3 (br s, 1 H, NH), 0.87 (s, 6 H, C(CH₃)₂), 0.65 (*m*, 2 H, NHCH₂CH₂C*H*₂Si).

### Beispiel 6: Aminosilan A-2

### 3-(2,2-dimethyl-3-(N-morpholino)-propylamino)-propyl-trimethoxysilan

Gemäss der allgemeinen Herstellvorschrift (Hydrierung) wurden 10 g Iminosilan ***I*-2** aus Beispiel 2 hydriert. Es wurde ein klares, farb- und geruchloses Öl mit einem Amingehalt von 6.49 mmol N/g erhalten, das für längere Zeit ohne Zersetzung gelagert werden konnte.
FT-IR: 2971 m sh, 2939s, 2867m, 2837m, 2814m, 2763m, 1885vw br, 1463m sh, 1454m, 1410w, 1387w, 1373w, 1359w, 1303w, 1268m, 1189s, 1150m, 1084vs sh, 1080vs, 1043s, 868m, 815s, 778s, 761 s sh, 679w. ¹H-NMR (CDCl₃, 300 K): δ 3.57 (s, 9 H, Si(OCH₃)₃), 2.58 (*t*, *J* = 7.2, 2 H, NHC*H*₂CH₂CH₂Si), 2.41 (*s*, 2 H, NC*H*₂C(CH₃)₂), 2.27 (*s*, 6 H, N(CH₃)₂), 2.15 (*s*, 2 H, NHC*H*₂C(CH₃)₂), 1.58 (*m*, 2 H, NHCH₂C*H*₂CH₂Si), 1.2 (br *s*, 1 H, NH), 0.89 (s, 6 H, C(CH₃)₂), 0.66 (*m*, 2 H, NHCH₂CH₂C*H*₂Si).

### Beispiel 7: Aminosilan A-3

### 3-(2,2-dimethyl-3-(N-morpholino)-propylamino)-propyl-triethoxysilan

Gemäss der allgemeinen Herstellvorschrift (Hydrierung) wurden 10 g Iminosilan ***I-3*** aus Beispiel 3 hydriert. Es wurde ein klares, gelbes, geruchloses Öl mit einem Amingehalt von 5.99 mmol N/g erhalten, das für längere Zeit ohne Zersetzung gelagert werden konnte.
FT-IR: 2970m, 2937m sh, 2926m, 2881 m, 2814m, 2764m, 2730w sh, 1880vw br, 1465m sh, 1454m, 1443m, 1410w, 1389m, 1362w, 1295w, 1263w, 1166m, 1101 s, 1075vs, 1043s, 953s, 845m, 775s, 680w.
¹H-NMR (CDCl₃, 300 K): δ 3.82 (*q*, *J* = 7.0, 6 H, Si(OC*H*₂CH₃)₃), 2.58 (*t*, *J* = 7.2, 2 H, NHC*H*₂CH₂CH₂Si), 2.41 (*s*, 2 H, NC*H*₂C(CH₃)₂), 2.27 (*s*, 6 H, N(CH₃)₂), 2.15 (*s*, 2 H, NHC*H*₂C(CH₃)₂), 1.59 (*m*, 2 H, NHCH₂C*H*₂CH₂Si), 1.23 (*t*, *J* = 7.0, 9 H, Si(OCH₂C*H*₃)₃), 1.1 (br s, 1 H, NH), 0.89 (s, 6 H, C(CH₃)₂), 0.63 (*m*, 2 H, NHCH₂CH₂C*H*₂Si).

### 5. Herstellung von silanfunktionellen Polymeren

### Beispiele 8 bis 11 und Vergleichsbeispiele 12 bis 14:

Für jedes Beispiel wurden 100 Gewichtsteile des in der Tabelle 1 angegebenen Polyurethanpolymers ("PU-Polymer *P*-*1*" oder "PU-Polymer *P-2*") unter Stickstoffatmosphäre vorgelegt, das in der Tabelle angegebene Aminosilan in der angegebenen Menge (in Gewichtsteilen) über einen Tropftrichter unter gutem Rühren zugegeben und bei Raumtemperatur gerührt, bis kein freies Isocyanat mittels IR-Spektroskopie mehr nachgewiesen wurde. Das Produkt wurde unter Ausschluss von Feuchtigkeit aufbewahrt.

### PU-Polymer P-1

Unter Stickstoffatmosphäre wurden 500.0 g Polyol Acclaim^{®} 12200 (Bayer; low monol Polyoxypropylendiol, OH-Zahl 11.0 mg KOH/g, Wassergehalt ca. 0.02 Gewichts-%), 22.0 g Isophorondiisocyanat (Vestanat^{®} IPDI, Degussa) und 0.05 g Di-n-butyl-zinndilaurat unter stetigem Rühren auf 90 °C aufgeheizt und auf dieser Temperatur belassen, bis der titrimetrisch bestimmte Gehalt an freien Isocyanatgruppen einen Wert von 0.75 Gewichts-% erreicht hatte. Das Produkt wurde auf Raumtemperatur abgekühlt und unter Ausschluss von Feuchtigkeit aufbewahrt. Die Viskosität bei 20 °C betrug 40 Pa.s.

### PU-Polymer P-2

Unter Stickstoffatmosphäre wurden 500.0 g Polyol Acclaim^{®} 12200 (Bayer; low monol Polyoxypropylendiol, OH-Zahl 11.0 mg KOH/g, Wassergehalt ca. 0.02 Gewichts-%), 24.4 g Tetramethyl-m-xylylendiisocyanat (TMXDI, Cytec) und 0.05 g Di-n-butyl-zinndilaurat unter stetigem Rühren auf 90 °C aufgeheizt und auf dieser Temperatur belassen, bis der titrimetrisch bestimmte Gehalt an freien Isocyanatgruppen einen Wert von 0.80 Gewichts-% erreicht hatte. Das Produkt wurde auf Raumtemperatur abgekühlt und unter Ausschluss von Feuchtigkeit aufbewahrt. Die Viskosität bei 20 °C betrug 55 Pa.s.

| **Beispiel** | **8** | **9** | **10** | **11** | **12 (Vgl.)** | **13 (Vgl.)** | **14 (Vgl.)** |
|---|---|---|---|---|---|---|---|
| PU-Polymer ***P-1*** | 100.00 | 100.00 | - | - | 100.00 | 100.00 | - |
| PU-Polymer ***P-2*** | - | - | 100.00 | 100.00 | - | - | 100.00 |
| Aminosilan ***A-1*** | 6.49 | - | 6.58 | - | - | - | - |
| Aminosilan ***A-2*** | - | - | - | 6.00 | - | - | - |
| Aminosilan ***A-3*** | - | 6.42 | - | - | - | - | - |
| 3-Aminopropyl-tri-methoxysilan ^{a} | - | - | - | - | 3.45 | - | - |
| N-(3-Trimethoxysilyl-propyl)-amino-bernsteinsäure-diethylester^{b} | - | - | - | - | - | 6.76 | 6.85 |
| | | | | | | | |
| Viskosität 20°C [Pa.s] | 109 | 137 | 142 | 142 | 149 | 81 | 155 |
| Tabelle 1: Zusammensetzung und Viskosität der Beispiele 8 bis 11 und der Vergleichsbeispiele 12 bis 14. "Vgl." steht für "Vergleich" | | | | | | | |
| ^{a} Silquest^{®} A-1110, GE Advanced Materials | | | | | | | |
| ^{b} Addukt aus ^{a} und Maleinsäurediethylester, beschrieben z.B. in US 5,364,955. | | | | | | | |

Aus der Tabelle 1 ist ersichtlich, dass die erfindungsgemässen silanfunktionellen Polymere der Beispiele 8 bis 11 eine tiefere Viskosität aufwiesen als das silanfunktionelle Polymer des Vergleichsbeispiels 12, welches vom entsprechenden primären Aminosilan abgeleitet ist.

### 6. Herstellung von feuchtigkeitshärtenden Zusammensetzungen

### Beispiele 15 bis 18 und Vergleichsbeispiele 19 bis 21:

Für jedes Beispiel wurden die in der Tabelle 2 angegebenen Inhaltsstoffe in den angegebenen Mengen (in Gewichtsteilen) mittels eines Zentrifugalmischers (SpeedMixer™ DAC 150, FlackTek Inc.) vermischt. An den so erhaltenen Zusammensetzungen wurde der Aspekt ("Aspekt Zus.") beurteilt und die Hautbildungszeit ("HBZ") im Normklima (23±1 °C, 50±5% relative Luftfeuchtigkeit) als Mass für die Aushärtegeschwindigkeit bestimmt. Dazu wurden einige Gramm der raumtemperaturwarmen Zusammensetzung in einer Schichtdicke von ca. 2 mm auf Pappkarton aufgetragen und im Normklima die Zeit bestimmt, die es dauerte, bis beim leichten Antippen der Oberfläche des Klebstoffs mittels einer Pipette aus LDPE erstmals keine Rückstände auf der Pipette mehr zurückblieben. Weiterhin wurden von den Zusammensetzungen jeweils drei Filme mit einer Schichtdicke von 2 mm hergestellt und während 14 Tagen im Normklima ausgehärtet. Von jeweils einem der Filme wurde der Aspekt beurteilt ("Aspekt Film NK") und die Zugfestigkeit, die Bruchdehnung und das E-Modul bei 0.5-5 % Dehnung nach DIN 53504 (Zuggeschwindigkeit: 200 mm/min) bestimmt (Werte in der Tabelle mit "(NK)" bezeichnet).

| **Beispiel** | | **15** | **16** | **17** | **18** | **19 (Vgl.)** | **20 (Vgl.)** | **21 (Vgl.)** |
|---|---|---|---|---|---|---|---|---|
| Polymer aus Beispiel / Menge | | 8 / 100 | 9 / 100 | 10 / 100 | 11 / 100 | 12 / 100 | 13 / 100 | 14 / 100 |
| Dibutylzinndilaurat | | 0.08 | 0.08 | 0.08 | 0.08 | 0.08 | 0.08 | 0.08 |
| N-(2-Aminoethyl)-3-amino-propyl-trimethoxysilan | | 0.5 | 0.5 | 0.5 | 0.5 | 0.5 | 0.5 | 0.5 |
| | | | | | | | | |
| Aspekt Zus. | | klar | klar | klar | klar | (klar)^{a} | klar | klar |
| HBZ [min] | | 85 | (30 h) | 89 | 140 | 37 | 100 | 127 |
| Aspekt Film NK | | farblos, klebfrei | farblos, klebrig | farblos, klebfrei | farblos, klebfrei | farblos, klebfrei | farblos, etwas klebrig | farblos, etwas klebrig |
| Zugfestigkeit | (NK) | 0.76 | 0.49 | 0.76 | 0.70 | 0.85 | 0.64 | 0.61 |
| [MPa] | (70/100) | 0.73 | 1.00 | 0.64 | 0.65 | 0.74 | 0.63 | 0.57 |
| | (90°C) | 0.70 | 0.96 | 0.51 | 0.57 | 0.61 | 0.47 | 0.43 |
| Bruchdeh- | (NK) | 75 | 166 | 85 | 72 | 66 | 107 | 124 |
| nung [%] | (70/100) | 87 | 158 | 95 | 114 | 63 | 122 | 156 |
| | (90°C) | 103 | 140 | 121 | 132 | 59 | 106 | 186 |
| E-Modul | (NK) | 1.64 | 0.78 | 1.54 | 1.46 | 2.10 | 1.24 | 1.03 |
| [MPa] | (70/100) | 1.28 | 1.05 | 1.25 | 1.23 | 1.83 | 0.84 | 0.53 |
| | (90°C) | 1.23 | 1.34 | 0.73 | 0.67 | 1.53 | 0.62 | 0.34 |
| Aspekt Film 90 °C | | farblos, klebfrei | farblos, etwas klebrig | farblos, klebfrei | farblos, klebfrei | farblos, fast klebfrei | gelb, klebrig | gelb, klebrig |
| Tabelle 2: Eigenschaften der Beispiele 15 bis 18 und der Vergleichsbeispiele 19 bis 21. ^{a} leicht inhomogen "Vgl." steht für "Vergleich" | | | | | | | | |

Der zweite Film wurde jeweils anschliessend an die Aushärtung im Normklima während 7 Tagen bei 70 °C und 100 % relativer Feuchtigkeit gelagert und dann auf die gleiche Weise die Zugfestigkeit, die Bruchdehnung und das E-Modul bei 0.5-5 % Dehnung bestimmt (Werte in der Tabelle mit "(70/100)" bezeichnet). Der dritte Film wurde jeweils anschliessend an die Aushärtung im Normklima während 7 Tagen bei 90 °C gelagert und dann auf die gleiche Weise die Zugfestigkeit, die Bruchdehnung und das E-Modul bei 0.5-5 % Dehnung bestimmt (Werte in der Tabelle mit "(90°C)" bezeichnet). Von diesem Film wurde schliesslich der Aspekt beurteilt ("Aspekt Film 90°C").

Die Resultate sind in der Tabelle 2 angegeben.

Aus der Tabelle 2 ist ersichtlich, dass die Hautbildungszeiten der erfindungsgemässen Beispiele 15 und 18 mit den Trimethoxysilan- und Morpholinogruppen aufweisenden silanfunktionellen Polymeren der Beispiele 8 und 11 deutlich kürzer waren als diejenigen der Vergleichsbeispiele 20 und 21, welche die silanfunktionellen Polymere der Vergleichsbeispiele 13 und 14 basierend auf dem sekundären Trimethoxyaminosilan aus dem Stand der Technik enthielten, was vermutlich auf einen katalytischen Effekt der Morpholinogruppen zurückzuführen ist. Innerhalb von 14 Tagen härteten die Zusammensetzungen zu transparenten Filmen mit für ungefüllte silanvernetzende Zusammensetzungen typischen mechanischen Eigenschaften aus. Die erfindungsgemässen Beispiele 15, 17 und 18 wiesen alle klebfreie Filme auf, während die Vergleichsbeispiele 20 und 21, die jeweils ein silanverntzendes Polymer mit dem sekundären Aminosilan aus dem Stand der Technik enthielten, eine etwas klebrige Oberfläche aufwiesen. Die Unterschiede in der Oberflächenklebrigkeit zeigten sich deutlich nach der Wärmebelastung bei 90 °C. Die Filme der Vergleichsbeispiele 20 und 21 waren vergilbt und klebrig, während die Filme der Beispiele 15, 17 und 18 farblos und klebfrei blieben. Das Vergleichsbeispiel 19, welches von einem primären Aminosilan abgeleitet ist, war zwar nach Wärmebelastung nur leicht klebrig, es wies aber eine für solche Systeme typische geringe Bruchdehnung auf, welche für viele Anwendungen nicht genügt. Das über Triethoxysilangruppen vernetzende Beispiel 16 wies eine langsame Aushärtung auf und war deshalb nach 14 Tagen noch klebrig. Bei Wärmebelastung härtete es jedoch gut nach, was sowohl aus den mechanischen Werten als auch aus der Abnahme der Klebrigkeit ersichtlich ist.

## Patentansprüche

1. Aminosilan der Formel (I) 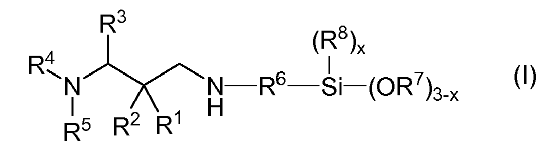 wobei
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R³ für ein Wasserstoffatom oder eine Alkylgruppe oder eine Arylalkylgruppe oder eine Alkoxycarbonylgruppe steht;
und entweder
R⁴ für einen einwertigen aliphatischen, cycloaliphatischen oder arylaliphatischen Rest mit 1 bis 20 C-Atomen, welcher gegebenenfalls Heteroatome enthält, steht, und
R⁵ für ein Wasserstoffatom oder für einen einwertigen aliphatischen, cycloaliphatischen oder arylaliphatischen Rest mit 1 bis 20 C-Atomen, welcher gegebenenfalls Heteroatome enthält, steht,
oder
R⁴ und R⁵ zusammen für einen zweiwertigen aliphatischen Rest mit 3 bis 30 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome enthält, stehen;
R⁶ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht;
R⁷ für eine Alkylgruppe mit 1 bis 10 C-Atomen steht, welche gegebenenfalls Ether-Sauerstoff aufweist, und zwei OR⁷-Gruppen zusammen für eine zweiwertige Glykolatgruppe, welche mit dem Silicium-Atom einen Ring bildet, stehen können;
R⁸ für eine Alkylgruppe mit 1 bis 8 C-Atomen steht; und
x für 0, 1 oder 2 steht.

2. Aminosilan der Formel (I) gemäss Anspruch 1, **dadurch gekennzeichnet, dass** R¹ und R² jeweils für einen Methylrest und/oder R³ für ein Wasserstoffatom stehen.

3. Aminosilan der Formel (I) gemäss Anspruch 1 oder 2, **dadurch gekennzeichnet, dass** entweder R⁴ für Methyl, Ethyl, Propyl, Isopropyl, Butyl, 2-Ethylhexyl, Cyclohexyl, 2-Hydroxyethyl, 2-Hydroxypropyl oder Benzyl, und R⁵ für Wasserstoff oder Methyl, Ethyl, Propyl, Isopropyl, Butyl, 2-Ethylhexyl, Cyclohexyl, 2-Hydroxyethyl, 2-Hydroxypropyl oder Benzyl stehen, oder R⁴ und R⁵ zusammen - unter Einbezug des Stickstoffatoms - einen Ring bilden, insbesondere einen Pyrrolidin-, Piperidin,- Morpholin- oder N-Alkylpiperazin-Ring, wobei dieser Ring oder die Alkylgruppe gegebenenfalls substituiert sind.

4. Aminosilan der Formel (I) gemäss einem der Ansprüche 1 bis 3, **dadurch gekennzeichnet, dass** R⁶ für einen linearen oder verzweigten Alkylenrest mit 1 bis 6 C-Atomen, insbesondere für eine Propylengruppe, oder für einen linearen Alkylenrest mit 5 bis 7 C-Atomen, welcher eine oder 2 sekundäre Aminogruppen in der Kette aufweist, insbesondere für einen -(CH₂)₂-NH-(CH₂)₃- oder für einen -(CH₂)₂-NH-(CH₂)₂-NH-(CH₂)₃-Rest, steht.

5. Iminosilan der Formel (II), welches zur Herstellung eines Aminosilans der Formel (I) gemäss einem der Ansprüche 1 bis 4 hydriert werden kann.

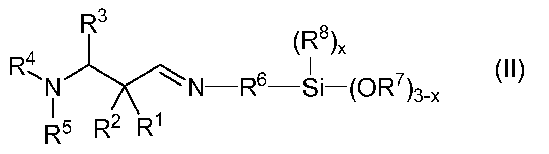

6. Verfahren zur Herstellung eines Iminosilans der Formel (II) gemäss Anspruch 5, **dadurch gekennzeichnet, dass** mindestens ein Aminosilan **AS** der Formel (III) mit mindestens einem Aldehyd **ALD** der Formel (IV) kondensiert wird.

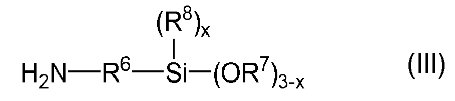

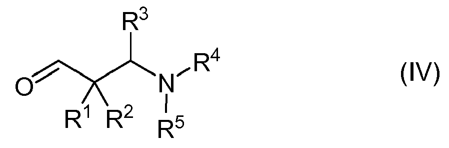

7. Verfahren gemäss Anspruch 6, **dadurch gekennzeichnet, dass** das Aminosilan **AS** der Formel (III) ausgewählt ist aus der Gruppe bestehend aus 3-Aminopropyl-trimethoxysilan, 3-Aminopropyl-triethoxysilan, 4-Amino-3,3-dimethylbutyl-trimethoxysilan, N-(2-Aminoethyl)-3-aminopropyl-trimethoxysilan und N-(2-Aminoethyl)-3-aminopropyl-triethoxysilan.

8. Verfahren gemäss Anspruch 6, **dadurch gekennzeichnet, dass** der Aldehyd **ALD** der Formel (IV) ausgewählt ist aus der Gruppe bestehend aus 2,2-Dimethyl-3-methylamino-propanal, 2,2-Dimethyl-3-dimethylamino-propanal, 2,2-Dimethyl-3-ethylamino-propanal, 2,2-Dimethyl-3-diethylamino-propanal, 2,2-Dimethyl-3-butylamino-propanal, 2,2-Dimethyl-3-dibutyl-amino-propanal, 2,2-Dimethyl-3-hexylamino-propanal, 2,2-Dimethyl-3-(2-ethylhexyl)amino-propanal, 2,2-Dimethyl-3-dodecylamino-propanal, 2,2-Dimethyl-3-(N-pyrrolidino)-propanal, 2,2-Dimethyl-3-(N-piperidino)-propanal, 2,2-Dimethyl-3-(N-morpholino)-propanal, 2,2-Dimethyl-3-(N-(2,6-dimethyl)morpholino)-propanal, 2,2-Dimethyl-3-benzylamino-propanal, 2,2-Dimethyl-3-(N-benzylmethylamino)-propanal, 2,2-Dimethyl-3-(N-benzyl-isopropylamino)-propanal, 2,2-Dimethyl-3-cyclohexylamino-propanal, 2,2-Dimethyl-3-(N-cyclohexylmethylamino)-propanal und N,N'-Bis(2,2-dimethyl-3-oxopropyl)-piperazin.

9. Addukt **AD,** erhalten aus der Umsetzung von mindestens einem Aminosilan der Formel (I) gemäss einem der Ansprüche 1 bis 4 mit mindestens einer Verbindung **VB,** die mindestens eine, bevorzugt mindestens zwei, Reaktivgruppen **RG** trägt, wobei die Reaktivgruppen **RG** ausgewählt sind aus der Gruppe bestehend aus Isocyanat-, Isothiocyanat-, Cyclocarbonat-, Epoxid-, Episulfid-, Aziridin-, Acryl-, Methacryl-, 1-Ethinylcarbonyl-, 1-Propinylcarbonyl-, Maleimid-, Citraconimid-, Vinyl-, Isopropenyl- und Allyl-Gruppen.

10. Addukt **AD** gemäss Anspruch 9 in Form eines silanfunktionellen Polymers **SP,** dadurch erhalten, dass als Verbindung **VB** ein Isocyanatgruppen aufweisendes Polyurethanpolymer **PUP** verwendet wurde.

11. Verbindung mit mindestens einer Silanolgruppe der Formel (IX), erhalten aus der - zumindest partiellen - Hydrolyse von mindestens einem Aminosilan der Formel (I) gemäss einem der Ansprüche 1 bis 4 oder von mindestens einem Iminosilan der Formel (II) gemäss Anspruch 5 oder von mindestens einem Addukt **AD** gemäss Anspruch 9 oder 10, 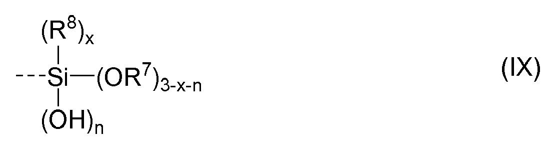 wobei n für 1 oder 2 oder 3 steht, mit der Massgabe, dass n höchstens den Wert (3-x) aufweist.

12. Verwendung eines Aminosilans der Formel (I) gemäss einem der Ansprüche 1 bis 4 oder eines Iminosilans der Formel (II) gemäss Anspruch 5 oder eines Addukts **AD** gemäss Anspruch 9 oder 10 als Haftvermittler und/oder Beschleuniger und/oder Trocknungsmittel, zum Beschichten von Oberflächen oder als Bestandteil von härtbaren Massen, Aktivatoren oder Primern.

13. Zusammensetzung enthaltend mindestens ein Aminosilan der Formel (I) gemäss einem der Ansprüche 1 bis 4 und/oder mindestens ein Iminosilan der Formel (II) gemäss Anspruch 5 und/oder mindestens ein Addukt **AD** gemäss Anspruch 9.

14. Feuchtigkeitshärtende Zusammensetzung, enthaltend mindestens ein silanfunktionelles Polymer **SP** gemäss Anspruch 10 und mindestens einen weiteren Bestandteil.

15. Verwendung einer feuchtigkeitshärtenden Zusammensetzung gemäss Anspruch 14 als Faserverbundwerkstoff (Composite), elastische Vergussmasse, Dichtstoff, Klebstoff, Belag, Beschichtung oder Anstrich für Bau- und Industrieanwendungen, sowie als geschäumte Masse.
